# EUROPEAN PATENT APPLICATION

(11) **EP 4 750 148 A1**
(43) Date of publication of application: **27.05.2026**
(21) Application number: 24850956.4
(22) Date of filing: 05.08.2024
(51) Int. Cl.: H04W 28/26

(54) **RESOURCE RESERVATION METHOD, APPARATUS AND SYSTEM**

(30) Priority: 07.08.2023 CN 202310990078
(71) Applicant: Huawei Technologies Co., Ltd., Shenzhen, Guangdong 518129 (CN)
(72) Inventor: GAO, Tao, Shenzhen, Guangdong 518129 (CN); SONG, Yuezhong, Shenzhen, Guangdong 518129 (CN); WANG, Tongtong, Shenzhen, Guangdong 518129 (CN)
(74) Representative: Maiwald GmbH
(86) International application number: PCT/CN2024/109730
(87) International publication number: WO 2025/031311

(57) **Abstract**

This application discloses a resource reservation method, apparatus, and system, and belongs to the field of network technologies. The method includes: A first network device obtains a first accumulated delay and a maximum tolerable delay of a first service, where the first accumulated delay is an initial accumulated delay, or the first accumulated delay is an accumulated delay from a transmitter of the first service to a previous-hop device of the first network device; the first network device obtains a slot forwarding entry of the first network device; and the first network device reserves a first slot for the first service based on the maximum tolerable delay, the first accumulated delay, and the slot forwarding entry of the first network device, where the first slot is an available slot that meets the maximum tolerable delay. In this application, transmission quality of the first service can be ensured.

## Description

This application claims priority to Chinese Patent Application No. 202310990078.1, filed on August 7, 2023, and entitled "RESOURCE RESERVATION METHOD, APPARATUS, AND SYSTEM", which is incorporated herein by reference in its entirety.

### TECHNICAL FIELD

This application relates to the field of network technologies, and in particular, to a resource reservation method, apparatus, and system.

### BACKGROUND

To ensure transmission quality of a service, a network may reserve a resource for the service based on a resource allocation protocol (resource allocation protocol, RAP), to forward the service by using the reserved resource. However, the current RAP cannot ensure transmission quality of a deterministic service.

### SUMMARY

This application provides a resource reservation method, apparatus, and system, to ensure transmission quality of a deterministic service. Technical solutions are as follows.

According to a first aspect, a resource reservation method is provided. The method includes: A first network device obtains a first accumulated delay and a maximum tolerable delay of a first service, where the first accumulated delay is an initial accumulated delay, or the first accumulated delay is an accumulated delay from a transmitter of the first service to a previous-hop device of the first network device; the first network device obtains a slot forwarding entry of the first network device; and the first network device reserves a first slot for the first service based on the maximum tolerable delay, the first accumulated delay, and the slot forwarding entry of the first network device, where the first slot is an available slot that meets the maximum tolerable delay. That the first network device reserves the first slot for the first service based on the maximum tolerable delay, the first accumulated delay, and the slot forwarding entry of the first network device includes: The first network device reserves, based on the maximum tolerable delay, the first accumulated delay, and the slot forwarding entry of the first network device, the first slot for the first service in a gate control list of a port that is in the first network device and that is configured to forward the first service.

According to the technical solution provided in this application, the first network device reserves the first slot for the first service based on the first accumulated delay, the maximum tolerable delay of the first service, and the slot forwarding entry of the first network device. In this case, after the first service arrives, the first network device may forward the first service (that is, forward a packet of the first service) through the first slot reserved for the first service. In this way, transmission quality of the first service can be ensured. In particular, when the first service is a deterministic service, deterministic transmission quality of the first service is ensured. For example, a deterministic delay of the first service is ensured. The technical solution provided in this application is a distributed resource reservation solution. A slot can be reserved for a service without a need for a controller to perform slot orchestration on a network device. Therefore, flexibility is high, and the technical solution is applicable to a network scenario without a controller.

Optionally, the slot forwarding entry of the first network device includes an end-to-end delay corresponding to the first slot, and the end-to-end delay corresponding to the first slot is a delay from the first network device to a receiver of the first service. For example, the end-to-end delay corresponding to the first slot is a delay of the first service from the first network device to the receiver of the first service when the first network device forwards the first service in the first slot. That the first network device reserves the first slot for the first service based on the maximum tolerable delay of the first service, the first accumulated delay, and the slot forwarding entry of the first network device includes: The first network device reserves the first slot for the first service based on the maximum tolerable delay, the first accumulated delay, and the end-to-end delay corresponding to the first slot.

According to the technical solution provided in this application, the first network device reserves the first slot for the first service based on the first accumulated delay, the maximum tolerable delay of the first service, and the end-to-end delay corresponding to the first slot, to ensure that the first slot reserved for the first service meets the maximum tolerable delay.

Optionally, the slot forwarding entry of the first network device further includes next-hop slot information, and the next-hop slot information indicates a second slot in an available slot of a next-hop device of the first network device. That the first network device reserves the first slot for the first service based on the maximum tolerable delay of the first service, the first accumulated delay, and the end-to-end delay corresponding to the first slot includes: The first network device reserves the first slot for the first service based on the maximum tolerable delay, the first accumulated delay, the end-to-end delay corresponding to the first slot, and the next-hop slot information. The second slot may be an earliest available slot of the next-hop device of the first network device. For example, the second slot is an earliest available slot in a gate control list of a port that is in the next-hop device and that is configured to forward the first service, and the first slot reserved by the first network device for the first service is before the second slot.

According to the technical solution provided in this application, the first network device reserves the first slot for the first service based on the first accumulated delay, the maximum tolerable delay of the first service, the end-to-end delay corresponding to the first slot, and the next-hop slot information. In this way, it can be ensured that the first slot reserved for the first service meets the maximum tolerable delay, and it can be ensured that the first slot reserved for the first service is before the second slot of the next-hop device.

Optionally, the method further includes: The first network device obtains first expected slot information, where the first expected slot information indicates a slot that the first network device is expected to reserve for the first service. For example, the first expected slot information indicates a first expected slot. That the first network device reserves the first slot for the first service based on the maximum tolerable delay of the first service, the first accumulated delay, and the slot forwarding entry of the first network device includes: The first network device reserves the first slot for the first service based on the maximum tolerable delay, the first accumulated delay, the first expected slot information, and the slot forwarding entry of the first network device. The first slot is the first expected slot indicated by the first expected slot information, or the first slot is after the first expected slot indicated by the first expected slot information.

According to the technical solution provided in this application, the first network device reserves the first slot for the first service based on the first accumulated delay, the first expected slot information, the maximum tolerable delay of the first service, and the slot forwarding entry of the first network device. In this way, it can be ensured that the first slot reserved for the first service meets the maximum tolerable delay, and it can be ensured that the first slot reserved for the first service meets an expectation as much as possible.

Optionally, the method further includes: The first network device sends a first packet to a second network device, where the first packet includes the maximum tolerable delay of the first service and a second accumulated delay, the second accumulated delay is an accumulated delay from the transmitter of the first service to the first network device, the second network device is the next-hop device of the first network device, and the first packet is used by the second network device to reserve a slot for the first service based on the maximum tolerable delay, the second accumulated delay, and a slot forwarding entry of the second network device. The first packet is a resource reservation packet used for slot reservation on the first service.

According to the technical solution provided in this application, the first network device sends the first packet to the second network device, so that the second network device can reserve the slot for the first service based on the maximum tolerable delay of the first service and the second accumulated delay that are included in the first packet and the slot forwarding entry of the second network device. After the first service arrives, the second network device may forward the first service through the slot reserved for the first service. In this way, transmission quality of the first service is ensured. In particular, when the first service is a deterministic service, deterministic transmission quality of the first service is ensured. For example, a deterministic delay of the first service is ensured. Because the second network device reserves the slot for the first service based on the resource reservation packet sent by the first network device, the technical solution provided in this application is a distributed resource reservation solution, and is applicable to a network scenario without a controller.

Optionally, the first packet further includes second expected slot information, the second expected slot information indicates a slot that the first network device expects the second network device to reserve for the first service, and the first packet is used by the second network device to reserve a slot for the first service based on the maximum tolerable delay of the first service, the second accumulated delay, the second expected slot information, and the slot forwarding entry of the second network device.

According to the technical solution provided in this application, the first packet sent by the first network device to the second network device includes the maximum tolerable delay, the second accumulated delay, and the second expected slot information of the first service, and the second network device reserves the slot for the first service based on the maximum tolerable delay, the second accumulated delay, the second expected slot information, and the slot forwarding entry of the second network device. In this way, it can be ensured that the slot reserved by the second network device for the first service meets the maximum tolerable delay, and it can be ensured that the slot reserved by the second network device for the first service meets an expectation as much as possible.

Optionally, that the first network device obtains the slot forwarding entry of the first network device includes: The first network device receives a second packet sent by the second network device, where the second packet indicates an available slot of the second network device, and the second network device is the next-hop device of the first network device; and the first network device generates the slot forwarding entry of the first network device based on the second packet and the first slot. For example, the second packet includes available slot information of the second network device, and the available slot information indicates the available slot of the second network device.

According to the technical solution provided in this application, the first network device generates the slot forwarding entry of the first network device based on the second packet sent by the second network device and the first slot of the first network device, so that the first network device can reserve, for the first service based on the maximum tolerable delay of the first service, the first accumulated delay, and the slot forwarding entry of the first network device, the first slot that meets the maximum tolerable delay.

Optionally, the second packet indicates that the available slot of the second network device includes the second slot, the second packet includes an end-to-end delay corresponding to the second slot, and the end-to-end delay corresponding to the second slot is a delay from the second network device to the receiver of the first service. For example, the second packet includes available slot information of the second network device, the available slot information indicates that the available slot of the second network device includes the second slot, the available slot information includes the end-to-end delay corresponding to the second slot, and the end-to-end delay corresponding to the second slot is a delay of the first service from the second network device to the receiver of the first service when the second network device forwards the first service in the second slot. That the first network device generates the slot forwarding entry of the first network device based on the second packet and the first slot includes: The first network device determines, based on the end-to-end delay corresponding to the second slot, the end-to-end delay corresponding to the first slot; and the first network device generates the slot forwarding entry of the first network device based on the end-to-end delay corresponding to the first slot.

According to the technical solution provided in this application, the first network device determines, based on the end-to-end delay corresponding to the second slot, the end-to-end delay corresponding to the first slot, and the first network device generates the slot forwarding entry of the first network device based on the end-to-end delay corresponding to the first slot, so that the first network device can reserve the first slot for the first service based on the maximum tolerable delay of the first service, the first accumulated delay, and the end-to-end delay that corresponds to the first slot and that is included in the slot forwarding entry, to ensure that the first slot reserved by the first network device for the first service meets the maximum tolerable delay.

Optionally, the method further includes: The first network device determines the next-hop slot information based on the second slot, where the next-hop slot information indicates the second slot. That the first network device generates the slot forwarding entry of the first network device based on the end-to-end delay corresponding to the first slot includes: The first network device generates the slot forwarding entry of the first network device based on the end-to-end delay corresponding to the first slot and the next-hop slot information.

According to the technical solution provided in this application, the first network device generates the slot forwarding entry of the first network device based on the end-to-end delay corresponding to the first slot and the next-hop slot information, so that the first network device can reserve the first slot for the first service based on the maximum tolerable delay of the first service, the first accumulated delay, the end-to-end delay that corresponds to the first slot and that is included in the slot forwarding entry, and the next-hop slot information included in the slot forwarding entry. In this way, it can be ensured that the first slot reserved by the first network device for the first service meets the maximum tolerable delay, and it can be ensured that the first slot reserved by the first network device for the first service is before the second slot indicated by the next-hop slot information.

Optionally, the second packet includes a slot bitmap, the slot bitmap includes a plurality of bits in one-to-one correspondence with a plurality of slots in a gate control list that is of the second network device and that is used to forward the first service, each bit indicates a state of a corresponding slot, and a state of any slot includes an available state or an unavailable state. For example, the second packet includes the available slot information of the second network device, and the available slot information includes the slot bitmap. The available state may be an idle (idle) state, and unavailable states include a reserved (reserved) state and an occupied (occupied) state.

According to the technical solution provided in this application, the second packet sent by the second network device to the first network device includes the slot bitmap, so that the first network device can determine the available slot and an unavailable slot of the second network device based on the slot bitmap.

Optionally, the first packet is a resource reservation protocol (resource allocation protocol, RAP) packet.

Optionally, the second packet is an intermediate system-to-intermediate system (intermediate system-to-intermediate system, ISIS) packet or a link-local registration protocol (link-local registration protocol, LRP) packet.

Optionally, the slot forwarding entry is a routing and forwarding entry or a flow forwarding entry.

According to a second aspect, a method for obtaining a slot forwarding entry is provided. The method includes: A first network device receives a packet sent by a second network device, where the packet indicates an available slot of the second network device; and the first network device generates a slot forwarding entry based on the packet and an available slot of the first network device. For example, the packet includes available slot information, and the available slot information indicates the available slot of the second network device. The second network device is a neighboring device of the first network device. For example, the second network device is a next-hop device of the first network device.

According to the technical solution provided in this application, the first network device generates the slot forwarding entry based on the available slot of the first network device and the packet that is sent by the second network device and that indicates the available slot of the second network device, so that the first network device reserves a slot for a service based on the slot forwarding entry.

Optionally, the available slot of the first network device includes a first slot, the packet indicates that the available slot of the second network device includes a second slot, the packet includes an end-to-end delay corresponding to the second slot, and the end-to-end delay corresponding to the second slot is a delay from the second network device to a receiver. For example, the packet includes the available slot information, the available slot information indicates that the available slot of the second network device includes the second slot, the available slot information includes the end-to-end delay corresponding to the second slot, and the end-to-end delay corresponding to the second slot is a delay from the second network device to a receiver of a first service. That the first network device generates the slot forwarding entry based on the packet and the available slot of the first network device includes: The first network device determines, based on the end-to-end delay corresponding to the second slot, an end-to-end delay corresponding to the first slot, where the end-to-end delay corresponding to the first slot is a delay from the first network device to the receiver; and the first network device generates the slot forwarding entry based on the end-to-end delay corresponding to the first slot.

According to the technical solution provided in this application, the first network device generates the slot forwarding entry based on the end-to-end delay corresponding to the first slot, so that the first network device can reserve the slot for the service based on the end-to-end delay that corresponds to the first slot and that is included in the slot forwarding entry.

Optionally, the method further includes: The first network device determines next-hop slot information based on the second slot, where the next-hop slot information indicates the second slot. That the first network device generates the slot forwarding entry based on the end-to-end delay corresponding to the first slot includes: The first network device generates the slot forwarding entry based on the end-to-end delay corresponding to the first slot and the next-hop slot information.

According to the technical solution provided in this application, the first network device generates the slot forwarding entry based on the end-to-end delay corresponding to the first slot and the next-hop slot information, so that the first network device can reserve the slot for the service based on the end-to-end delay that corresponds to the first slot and that is included in the slot forwarding entry and the next-hop slot information included in the slot forwarding entry.

Optionally, the packet includes a slot bitmap, the slot bitmap includes a plurality of bits in one-to-one correspondence with a plurality of slots in a gate control list of the second network device, each bit indicates a state of a corresponding slot, and a state of any slot includes an available state or an unavailable state. For example, the packet includes the available slot information of the second network device, and the available slot information includes the slot bitmap.

According to the technical solution provided in this application, the packet sent by the second network device to the first network device includes the slot bitmap, so that the first network device can determine the available slot and an unavailable slot of the second network device based on the slot bitmap.

Optionally, the packet is an ISIS packet or an LRP packet.

Optionally, the slot forwarding entry is a routing and forwarding entry or a flow forwarding entry.

According to a third aspect, a resource reservation apparatus is provided. The resource reservation apparatus includes modules configured to perform the method provided in any one of the first aspect or the optional manners of the first aspect.

According to a fourth aspect, an apparatus for obtaining a slot forwarding entry is provided. The apparatus for obtaining a slot forwarding entry includes modules configured to perform the method provided in any one of the second aspect or the optional manners of the second aspect.

The modules in the third aspect or the fourth aspect may be implemented based on software, hardware, or a combination of software and hardware, and the modules may be randomly combined or divided based on a specific implementation.

According to a fifth aspect, a resource reservation apparatus is provided. The resource reservation apparatus includes a memory and a processor. The memory is configured to store a computer program. The processor is configured to execute the computer program stored in the memory, to cause the resource reservation apparatus to perform the method provided in any one of the first aspect or the optional manners of the first aspect.

According to a sixth aspect, a resource reservation apparatus is provided. The resource reservation apparatus includes a main control board and an interface board. The main control board and the interface board are configured to implement the method provided in any one of the first aspect or the optional manners of the first aspect.

According to a seventh aspect, an apparatus for obtaining a slot forwarding entry is provided. The apparatus for obtaining a slot forwarding entry includes a memory and a processor. The memory is configured to store a computer program. The processor is configured to execute the computer program stored in the memory, to cause the apparatus for obtaining a slot forwarding entry to perform the method provided in any one of the second aspect or the optional manners of the second aspect.

According to an eighth aspect, an apparatus for obtaining a slot forwarding entry is provided. The apparatus for obtaining a slot forwarding entry includes a main control board and an interface board. The main control board and the interface board are configured to implement the method provided in any one of the second aspect or the optional manners of the second aspect.

According to a ninth aspect, a resource reservation system is provided. The resource reservation system includes a first network device and a second network device. The second network device is a next-hop device of the first network device, and the first network device includes the resource reservation apparatus provided in the third aspect, the fifth aspect, or the sixth aspect.

According to a tenth aspect, a system for obtaining a slot forwarding entry is provided. The system includes a first network device and a second network device. The second network device is a next-hop device of the first network device, and the first network device includes the apparatus for obtaining a slot forwarding entry provided in the fourth aspect, the seventh aspect, or the eighth aspect.

According to an eleventh aspect, a computer-readable storage medium is provided. The computer-readable storage medium stores a computer program. When the computer program is executed, the method provided in any one of the first aspect or the optional manners of the first aspect is implemented, or the method provided in any one of the second aspect or the optional manners of the second aspect is implemented.

According to a twelfth aspect, a computer program product is provided. The computer program product includes a program or code. When the program or the code is executed, the method provided in any one of the first aspect or the optional manners of the first aspect is implemented, or the method provided in any one of the second aspect or the optional manners of the second aspect is implemented.

According to a thirteenth aspect, a chip is provided. The chip includes a programmable logic circuit and/or program instructions. When the chip is run, the chip is configured to implement the method provided in any one of the first aspect or the optional manners of the first aspect, or implement the method provided in any one of the second aspect or the optional manners of the second aspect.

Beneficial effects achieved by the technical solutions provided in this application include: According to the resource reservation method, apparatus, and system provided in this application, the network device reserves the slot for the first service based on the accumulated delay, the maximum tolerable delay of the first service, and the slot forwarding entry of the network device. After the first service arrives, the network device may forward the first service through the slot reserved for the first service. In this way, the transmission quality of the first service is ensured. In particular, when the first service is the deterministic service, the deterministic transmission quality of the first service is ensured. For example, the deterministic delay of the first service is ensured.

### BRIEF DESCRIPTION OF DRAWINGS

FIG. 1 is a diagram of an application scenario according to an embodiment of this application;
FIG. 2 is a diagram of another application scenario according to an embodiment of this application;
FIG. 3 is a flowchart of a resource reservation method according to an embodiment of this application;
FIG. 4 is a flowchart of another resource reservation method according to an embodiment of this application;
FIG. 5 is a diagram of state switching of a slot according to an embodiment of this application;
FIG. 6 is a diagram of a subtype length value (type length value, TLV) field according to an embodiment of this application;
FIG. 7 is a flowchart of still another resource reservation method according to an embodiment of this application;
FIG. 8 is a flowchart of a method for obtaining a slot forwarding entry according to an embodiment of this application;
FIG. 9 is a diagram of a resource reservation apparatus according to an embodiment of this application;
FIG. 10 is a diagram of an apparatus for obtaining a slot forwarding entry obtaining according to an embodiment of this application;
FIG. 11 is a diagram of a processing apparatus according to an embodiment of this application; and
FIG. 12 is a diagram of another processing apparatus according to an embodiment of this application.

### DESCRIPTION OF EMBODIMENTS

The following further describes in detail implementations of this application with reference to the accompanying drawings.

To ensure transmission quality of a service, a network can reserve a resource for the service based on a resource reservation protocol (resource allocation protocol, RAP) proposed by the Institute of Electrical and Electronics Engineers (Institute of Electrical and Electronics Engineers, IEEE) 802.1Qdd draft standard. For example, the network includes a forwarding path of the service, a transmitter of the service sends a RAP packet to a receiver of the service through the forwarding path, and a network device on the forwarding path reserves a bandwidth for the service based on the RAP packet. However, the current RAP is mainly based on asynchronous scheduling, for example, a strict priority (strict priority, SP) and an asynchronous traffic shaper (asynchronous traffic shaper, ATS), and it is difficult to ensure transmission quality of a deterministic service (for example, an industrial control service) that has a quality of service (quality of service, QoS) requirement such as a delay or a jitter.

To ensure transmission quality of a deterministic service, in a related technology, a gate control forwarding mechanism defined in IEEE 802.1 Qbv is combined into a centralized network architecture proposed in IEEE 802.1 Qcc, to ensure the transmission quality of the deterministic service. However, according to the technical solution, a controller needs to perform slot orchestration on a network device on a forwarding path of the service. Consequently, flexibility is low, and the technical solution is difficult to be applied to a network scenario without a controller.

For ease of understanding, the gate control forwarding mechanism defined in IEEE 802.1 Qbv is first briefly described herein.

The gate control forwarding mechanism defined in IEEE 802.1 Qbv is a scheduling mechanism based on a gate control list (gate control list, GCL) and is generally used in a time sensitive network (time sensitive network, TSN). In the scheduling mechanism, a port in the network device includes a GCL. When the network device forwards any packet through any port in the network device, the network device buffers the packet in a packet queue of the port based on an identifier (identifier, ID), a priority, a service class, and the like of the packet for queuing up, and the network device schedules a plurality of packet queues of the port based on the GCL of the port, to forward packets in the plurality of packet queues. A GCL of each port includes a plurality of slots and a plurality of pieces of queue state information corresponding to each slot. The plurality of pieces of queue state information are in one-to-one correspondence with the plurality of packet queues of each port. Each piece of queue state information corresponding to each slot indicates an open/closed state of a corresponding packet queue in the slot. In each slot, the network device schedules a packet queue in the open state in the plurality of packet queues to forward packets in these packet queues.

In an example, Table 1 shows one GCL. The GCL includes k slots T1 to Tk and eight pieces of queue state information (where both "O" and "C" in the GCL are queue state information) corresponding to each slot. The eight pieces of queue state information are in one-to-one correspondence with eight packet queues Q1 to Q8. The queue state information "O" indicates that a corresponding packet queue is in the open state. The queue state information "O" is also referred to as open state information, the queue state information "C" indicates that a corresponding packet queue is in the closed state, and the queue state information "C" is also referred to as closed state information. As shown in Table 1, queue state information "O" corresponding to the slot T1 and the packet queue Q1 indicates that the packet queue Q1 is in the open state in the slot T1. This indicates that a network device including the GCL schedules the packet queue Q1 in the slot T1 to forward a packet in the packet queue Q1. Similarly, queue state information "O" corresponding to the slot T2 and the packet queue Q2 indicates that the packet queue Q2 is in the open state in the slot T2. This indicates that a network device including the GCL schedules the packet queue Q2 in the slot T2 to forward a packet in the packet queue Q2. The rest may be deduced by analogy.

**Table 1**

| Packet queue | T1 | T2 | ... | Tk |
|---|---|---|---|---|
| Q1 | O | C | ... | C |
| Q2 | C | O | ... | C |
| Q3 | C | C | ... | C |
| Q4 | C | C | ... | C |
| Q5 | C | C | ... | C |
| Q6 | C | C | ... | C |
| Q7 | C | C | ... | O |
| Q8 | C | C | ... | C |

It can be learned from the foregoing descriptions of IEEE 802.1 Qbv that, in a technical solution in combination with IEEE 802.1 Qbv and IEEE 802.1 Qcc, a controller needs to determine queue state information corresponding to each slot in a GCL, shown in the foregoing Table 1, of a network device on a forwarding path of a service, to perform slot orchestration on the network device on the forwarding path (in other words, the controller needs to configure the GCL of the network device on the forwarding path). Consequently, flexibility of the technical solution is low, and the technical solution is difficult to be applied to a network scenario without a controller.

Embodiments of this application provide a resource reservation solution. A network device reserves a slot for a first service based on an accumulated delay (an initial accumulated delay or an accumulated delay from a transmitter of the first service to a previous-hop device of the network device), a maximum tolerable delay of the first service, and a slot forwarding entry of the network device. In this case, the network device may forward the first service (that is, forward a packet of the first service) through the slot reserved for the first service. In this way, transmission quality of the first service is ensured. In particular, when the first service is a deterministic service, deterministic transmission quality of the first service is ensured. For example, a deterministic delay of the first service is ensured. The resource reservation solution provided in embodiments of this application is a distributed resource reservation solution. A slot can be reserved for a service without a need for a controller to perform slot orchestration on a network device. Therefore, flexibility is high, and the solution is applicable to a network scenario without a controller.

The slot in embodiments of this application is a slot in a gate control list defined in IEEE 802.1 Qbv, and the slot is a time resource. That any network device reserves a slot for the first service means that the network device reserves a slot for the first service in a gate control list of a port configured to forward the first service. In some descriptions of embodiments of this application, the gate control list of the port configured to forward the first service is referred to as a gate control list used to forward the first service. The port configured to forward the first service includes a packet queue used to buffer the first service (that is, a queue used to buffer the packet of the first service, where for ease of description, the packet queue used to buffer the first service is referred to as a first queue in embodiments of this application). Optionally, that any network device reserves a slot for the first service includes: The network device updates queue state information corresponding to the first queue in a plurality of pieces of queue state information corresponding to the slot reserved for the first service in the gate control list to open state information, to indicate that the first queue is in an open state in the slot reserved for the first service, so as to indicate to schedule the first queue in the slot to forward the packet of the first service.

The following describes the technical solutions of this application, and an application scenario of this application is first described.

In the application scenario of embodiments of this application, a communication system is provided. The communication system includes a communication network and user equipments accessing the communication network. The communication network is used to perform service forwarding between different user equipments accessing the communication network, to implement communication between the different user equipments. The communication network may be a bearer network, a campus network, a vehicle-mounted network, an industrial network, or the like, and the communication network may be a deterministic network (deterministic network, DetNet). For example, the deterministic network is a time sensitive network (time sensitive network, TSN).

The communication network includes a plurality of network devices. The network device is a switch, a router, a virtual switch created in a physical device, a virtual router created in a physical device, or the like. Types of the plurality of network devices are the same or different. For example, the plurality of network devices are all switches or routers, or some of the plurality of network devices are switches, and the other network devices are routers. The plurality of network devices include an edge device, and may further include a core device. The edge device is located at an edge of the communication network, and is used by the user equipment to access the communication network. The core device is connected between different edge devices, and is configured to forward a service between the edge devices. For example, the edge device is a provider edge (provider edge, PE) device, and the core device is a provider (provider, P) device. The user equipments accessing the communication network include an industrial controller, an industrial actuator, a host, a user terminal, a home gateway, a server, a virtual machine (virtual machine, VM) created in a server, or the like. The industrial controller may be a programmable logic controller (programmable logic controller, PLC) or a distributed control system (distributed control system, DCS), and the industrial actuator may be a sensor, a machine tool, a transmission device, a server, a frequency converter, or the like.

In embodiments of this application, a port in the network device in the communication network includes a gate control list, and the network device in the communication network schedules a plurality of packet queues of the port based on the gate control list of the port in the network device, to forward packets in the plurality of packet queues. The user equipments accessing the communication network include a transmitter of a first service and a receiver of the first service. The first service is a service that has a service level agreement (service level agreement, SLA) requirement, for example, a low delay or jitter. For example, the first service is an industrial control service. The communication network includes a forwarding path of the first service. Network devices on the forwarding path include an ingress (ingress) device, an egress (egress) device, and a transit (transit) device located between the ingress device and the egress device. The ingress device is connected to the transmitter, and the egress device is connected to the receiver. Before the first service arrives, the network device on the forwarding path reserves a slot for the first service based on an accumulated delay (where for the ingress device on the forwarding path, the accumulated delay is an initial accumulated delay, for example, 0; and for the transit device or the egress device on the forwarding path, the accumulated delay is an accumulated delay from the transmitter to a previous-hop device of the network device), a maximum tolerable delay of the first service, and a slot forwarding entry of the network device (that is, reserves a slot for the first service in a gate control list of a port configured to forward the first service). After the first service arrives, the network device on the forwarding path forwards the first service through the slot reserved for the first service, to ensure deterministic quality of the first service. Optionally, before the first service arrives, the transmitter sends a resource reservation packet to the receiver through the forwarding path (or the ingress device on the forwarding path may send a resource reservation packet to the egress device on the forwarding path or the receiver). The resource reservation packet carries the accumulated delay and the maximum tolerable delay of the first service, the maximum tolerable delay is a maximum delay that is from the transmitter to the receiver and that can be tolerated by the first service, and the accumulated delay carried in the resource reservation packet is updated hop by hop. An accumulated delay carried in a resource reservation packet received by the ingress device on the forwarding path is an initial accumulated delay, and an accumulated delay carried in a resource reservation packet received by each network device in the transit device and the egress device on the forwarding path is an accumulated delay from the transmitter to the previous-hop device of the network device. Each network device on the forwarding path reserves, based on the maximum tolerable delay and the accumulated delay that are carried in the resource reservation packet received by the network device, and the slot forwarding entry of the network device, a slot for the first service in the gate control list of the port configured to forward the first service, updates, based on the accumulated delay carried in the resource reservation packet and the slot reserved by the network device for the first service, the accumulated delay carried in the resource reservation packet, and then sends an updated resource reservation packet to a next-hop device. The slot forwarding entry of each network device is generated by the network device based on an available slot of the network device and available slot information synchronized by a neighboring device of the network device to the network device. The slot forwarding entry includes slot reservation related information. Each network device reserves the slot for the first service based on the maximum tolerable delay and the accumulated delay that are carried in the resource reservation packet, and the slot reservation related information in the slot forwarding entry of the network device.

It should be noted that, names of the network device, the ingress device, the transit device, the egress device, the forwarding path, the transmitter, the receiver, and the like in embodiments of this application are merely examples. In some implementation scenarios, the network device is also referred to as a network node, a forwarding node, a forwarding device, a gateway node, a gateway device, a routing node, a routing device, a switching node, a switching device, or the like. The ingress device is also referred to as an ingress node, a head node (head node), a head node device, a first node, a first node device, or the like. The transit device is also referred to as a transit node, an intermediate node, an intermediate device, or the like. The egress device is also referred to as an egress node, an end node (end node), an end node device, or the like. The forwarding path is also referred to as a transmission path, a communication path, a transmission channel, or the like. The transmitter is also referred to as a transmitter device, and the receiver is also referred to as a receiver device. In addition, the forwarding path of the first service in embodiments of this application may be a pre-computed path, or may be a path determined during transmission of a packet of the first service (for example, the resource reservation packet used for resource reservation on the first service). This is not limited in embodiments of this application.

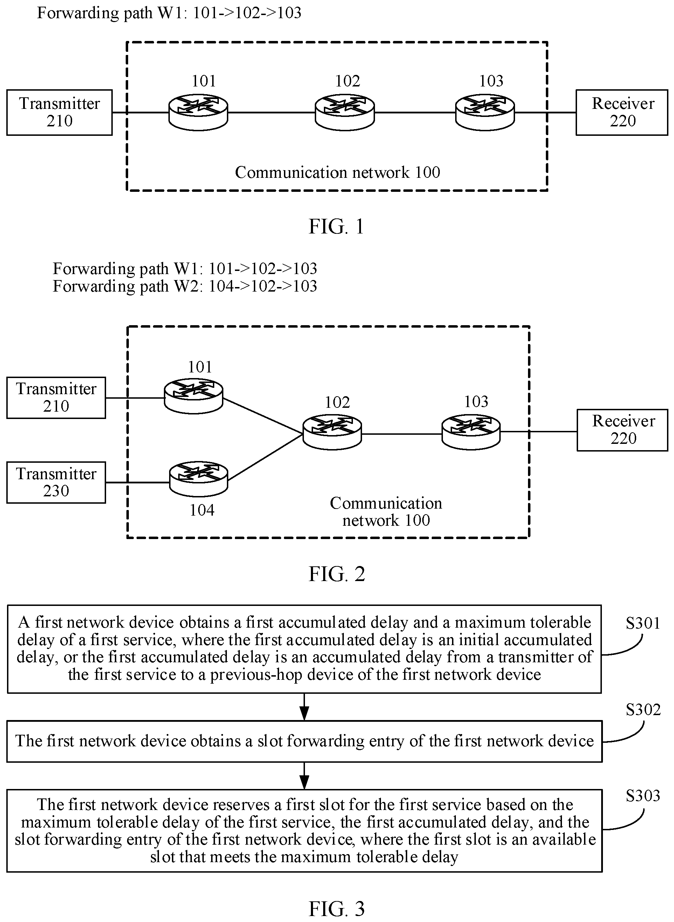

In an example, FIG. 1 is a diagram of an application scenario according to an embodiment of this application. A communication system provided in the application scenario includes a communication network 100 and a transmitter 210 and a receiver 220 that access the communication network 100. The communication network 100 includes network devices 101 to 103. The network device 101 and the network device 103 are edge devices in the communication network 100, and the network device 102 is a core device in the communication network 100. For example, both the network device 101 and the network device 103 are PE devices, and the network device 102 is a P device. The transmitter 210 is connected to the network device 101, and the transmitter 210 accesses the communication network 100 via the network device 101. The receiver 220 is connected to the network device 103, and the receiver 220 accesses the communication network 100 via the network device 103. For example, the transmitter 210 is a transmitter of a first service, the receiver 220 is a receiver of the first service, the communication network 100 includes a forwarding path W1 of the first service, the forwarding path W1 includes the network devices 101 to 103, the network device 101 is an ingress device on the forwarding path W1, the network device 103 is an egress device on the forwarding path W1, the network device 102 is a transit device on the forwarding path W1, the network devices 101 to 103 include ports configured to forward the first service, and the port configured to forward the first service in each of the network devices 101 to 103 includes a gate control list (where for ease of description, the gate control list of the port configured to forward the first service in the network device 101 is referred to as a gate control list 1, the gate control list of the port configured to forward the first service in the network device 102 is referred to as a gate control list 2, and the gate control list of the port configured to forward the first service in the network device 103 is referred to as a gate control list 3). Before the first service arrives, each of the network devices 101 to 103 reserves, based on an accumulated delay (where for the ingress device 101 on the forwarding path W1, the accumulated delay is an initial accumulated delay, and for the transit device 102 or the egress device 103 on the forwarding path W1, the accumulated delay is an accumulated delay from the transmitter 210 to a previous-hop device of the network device), a maximum tolerable delay of the first service, and a slot forwarding entry of the network device, a slot for the first service in the gate control list of the port that is in the network device and that is configured to forward the first service. Optionally, the transmitter 210 sends a resource reservation packet to the receiver 220 through the forwarding path W1, and the network devices 101 to 103 on the forwarding path W1 reserve slots for the first service based on received resource reservation packets and local slot forwarding entries. For example, the network device 101 receives a resource reservation packet A1 sent by the transmitter 210, where the resource reservation packet A1 carries an initial accumulated delay D0 and the maximum tolerable delay of the first service, and the network device 101 reserves a slot for the first service in the gate control list 1 based on the maximum tolerable delay and the initial accumulated delay D0 that are carried in the resource reservation packet A1, and the slot forwarding entry of the network device 101. The network device 101 determines, based on the initial accumulated delay D0 carried in the resource reservation packet A1 and the slot reserved by the network device 101 for the first service, an accumulated delay D1 from the transmitter 210 to the network device 101, and updates, by using the accumulated delay D1, the accumulated delay carried in the resource reservation packet A1 (for example, replaces the initial accumulated delay D0 carried in the resource reservation packet A1 with the accumulated delay D1) to obtain an updated resource reservation packet A2. The resource reservation packet A2 carries the accumulated delay D1 and the maximum tolerable delay of the first service. The network device 101 forwards the resource reservation packet A2 to the network device 102. The network device 102 receives the resource reservation packet A2. The network device 102 reserves a slot for the first service in the gate control list 2 based on the maximum tolerable delay and the accumulated delay D1 that are carried in the resource reservation packet A2, and the slot forwarding entry of the network device 102. The network device 102 determines an accumulated delay D2 from the transmitter 210 to the network device 102 based on the accumulated delay D1 carried in the resource reservation packet A2 and the slot reserved by the network device 102 for the first service, and updates, by using the accumulated delay D2, the accumulated delay carried in the resource reservation packet A2 (for example, replaces the accumulated delay D1 carried in the resource reservation packet A2 with the accumulated delay D2) to obtain an updated resource reservation packet A3. The resource reservation packet A3 carries the accumulated delay D2 and the maximum tolerable delay of the first service. The network device 102 forwards the resource reservation packet A3 to the network device 103. The network device 103 receives the resource reservation packet A3, and the network device 103 reserves a slot for the first service in the gate control list 3 based on the maximum tolerable delay and the accumulated delay D2 that are carried in the resource reservation packet A3, and the slot forwarding entry of the network device 103. Optionally, the network device 103 sends the resource reservation packet A3 to the receiver 220, or the network device 103 determines, based on the accumulated delay D2 carried in the resource reservation packet A3 and the slot reserved by the network device 103 for the first service, an accumulated delay from the transmitter 210 to the network device 103, and updates, by using the accumulated delay, the accumulated delay carried in the resource reservation packet A3. The network device 103 sends an updated resource reservation packet to the receiver 220. After the network devices 101 to 103 reserve the slots for the first service, and after the first service arrives, the network devices 101 to 103 forward the packet of the first service through the slots reserved for the first service.

In this embodiment of this application, each of the network devices 101 to 103 reserves a slot for the first service in an available slot of the network device, and a state of the available slot is an available state. After reserving the slot for the first service, each of the network devices 101 and 102 updates a state of the slot reserved for the first service to a reserved (reserved) state. After reserving the slot for the first service, the network device 103 updates a state of the slot reserved for the first service to an occupied (occupied) state, and the network device 103 sends an acknowledgment packet to the network device 101 through a reverse path of the forwarding path W1. The network devices 101 and 102 update, based on the acknowledgment packet, the states of the slots reserved for the first service to the occupied state. In this case, the network devices 101 to 103 each successfully reserve the slot for the first service. In this embodiment of this application, both the reserved state and the occupied state are unavailable states, and a slot in the reserved state or the occupied state is an unavailable slot. This is not limited in embodiments of this application.

FIG. 1 is described by using an example in which the communication network 100 includes the network device 101 to 103, and user equipments accessing the communication network 100 include the transmitter 210 of the first service and the receiver 220 of the first service. In another embodiment, the communication network 100 includes more or fewer network devices than those in FIG. 1, the user equipments accessing the communication network 100 include transmitters and receivers of a plurality of services, and at least some of the plurality of services have a same transmitter and/or a same receiver. In another example, FIG. 2 is a diagram of another application scenario according to an embodiment of this application. A communication system provided in the application scenario includes a communication network 100, and a transmitter 210, a receiver 220, and a transmitter 230 that access the communication network 100. The communication network 100 includes network devices 101 to 104. The network devices 101, 103, and 104 are edge devices in the communication network 100. The network device 102 is a core device in the communication network 100. The transmitter 210 is connected to the network device 101, and the transmitter 210 accesses the communication network 100 via the network device 101. The receiver 220 is connected to the network device 103, and the receiver 220 accesses the communication network 100 via the network device 103. The transmitter 230 is connected to the network device 104, and the transmitter 230 accesses the communication network 100 via the network device 104. For example, the transmitter 210 is a transmitter of a first service, the transmitter 230 is a transmitter of a second service, the receiver 220 is a receiver of the first service and a receiver of the second service, the communication network 100 includes a forwarding path W1 of the first service and a forwarding path W2 of the second service, the forwarding path W1 includes the network devices 101 to 103, and the forwarding path W2 includes the network devices 104 and 102 and 103. Before the first service arrives, each of the network devices 101 to 103 reserves, based on an accumulated delay, a maximum tolerable delay of the first service, and a slot forwarding entry of the network device, a slot for the first service in a gate control list of a port that is in the network device and that is configured to forward the first service. Before the second service arrives, each of the network devices 104, 102, and 103 reserves, based on an accumulated delay, a maximum tolerable delay of the second service, and a slot forwarding entry of the network device, a slot for the second service in a gate control list of a port that is in the network device and that is configured to forward the second service. For a process in which each network device reserves the slot, refer to related descriptions of the application scenario shown in FIG. 1 and the following embodiments. Details are not described herein.

The foregoing descriptions of the application scenario of this application are merely used as examples, and are not intended to limit the technical solutions of this application. In an implementation process, a quantity of network devices, a quantity of user equipments, and a relationship between these devices in the application scenario may be configured according to a requirement. In the foregoing embodiments, an example in which the forwarding path of the first service and the forwarding path of the second service each include one transit device is used for description. In some embodiments, the forwarding path of the first service and/or the forwarding path of the second service include/includes a plurality of transit devices. In some other embodiments, the forwarding path of the first service and/or the forwarding path of the second service include/includes no transit device. This is not limited in embodiments of this application. In addition, the technical solutions in embodiments of this application may be performed by a network device or units in the network device. The units in the network device may be implemented by using hardware, software, or a combination of software and hardware. For example, a unit in the PE device may be referred to as a PE unit, a unit in the P device may be referred to as a P unit, and both the PE unit and the P unit may be implemented by using hardware, software, or a combination of software and hardware. This is not limited in embodiments of this application.

The foregoing describes the application scenario of this application, and the following describes method embodiments of this application.

FIG. 3 is a flowchart of a resource reservation method according to an embodiment of this application. The resource reservation method is performed by a first network device, and the first network device is any network device on a forwarding path of a first service (that is, the first network device is an ingress device, a transit device, or an egress device on the forwarding path). For example, as shown in FIG. 1 or FIG. 2, the forwarding path W1 is the forwarding path of the first service, and the first network device is any one of the network devices 101 to 103. Refer to FIG. 3. The resource reservation method includes the following steps S301 to S303.

S301: The first network device obtains a first accumulated delay and a maximum tolerable delay of the first service, where the first accumulated delay is an initial accumulated delay, or the first accumulated delay is an accumulated delay from a transmitter of the first service to a previous-hop device of the first network device.

The first network device is the ingress device, the transit device, or the egress device on the forwarding path of the first service. When the first network device is the ingress device on the forwarding path of the first service, the first accumulated delay is the initial accumulated delay, and the initial accumulated delay is an initial value of an accumulated delay. For example, the initial accumulated delay is 0. When the first network device is the transit device or the egress device on the forwarding path of the first service, the first accumulated delay is the accumulated delay from the transmitter of the first service to the previous-hop device of the first network device, and the first accumulated delay is obtained by sequentially accumulating, based on the initial accumulated delay, slots reserved for the first service by network devices between the transmitter and the first network device.

In this embodiment of this application, the first accumulated delay may be configured in the first network device, or may be carried in a resource reservation packet that is received by the first network device and that is used for slot reservation on the first service. The resource reservation packet is from the transmitter of the first service or from the ingress device on the forwarding path of the first service. In an embodiment, the first network device is the ingress device on the forwarding path of the first service, a user configures the first accumulated delay (that is, the initial accumulated delay) in the first network device, and the first network device obtains the first accumulated delay configured by the user. In another embodiment, the first network device is the ingress device, the transit device, or the egress device on the forwarding path of the first service. A user configures the initial accumulated delay at the transmitter of the first service. The transmitter generates a resource reservation packet used for slot reservation on the first service. The resource reservation packet carries the initial accumulated delay. The transmitter sends the resource reservation packet through the forwarding path. Each network device on the forwarding path reserves a slot for the first service based on the resource reservation packet received by the network device. Each network device on the forwarding path obtains, based on the accumulated delay carried in the resource reservation packet and the slot reserved by the network device for the first service, an accumulated delay corresponding to the network device, and updates, by using the accumulated delay corresponding to the network device, the accumulated delay carried in the resource reservation packet. The first network device obtains the first accumulated delay from the resource reservation packet received by the first network device. In still another embodiment, the first network device is the transit device or the egress device on the forwarding path of the first service. A user configures the initial accumulated delay in the ingress device on the forwarding path. The ingress device generates a resource reservation packet used for slot reservation on the first service. The resource reservation packet carries the initial accumulated delay. The ingress device reserves a slot for the first service based on the resource reservation packet. The ingress device obtains, based on the accumulated delay (that is, the initial accumulated delay) carried in the resource reservation packet and the slot reserved by the ingress device for the first service, an accumulated delay corresponding to the ingress device, and updates, by using the accumulated delay corresponding to the ingress device, the accumulated delay carried in the resource reservation packet. The ingress device sends an updated resource reservation packet through the forwarding path. Each network device in the transit device and the egress device on the forwarding path reserves a slot for the first service based on the resource reservation packet received by the network device, and obtains, based on the accumulated delay carried in the resource reservation packet and the slot reserved by the network device for the first service, an accumulated delay corresponding to the network device, and updates, by using the accumulated delay corresponding to the network device, the accumulated delay carried in the resource reservation packet. The first network device obtains the first accumulated delay from the resource reservation packet received by the first network device. It may be understood that, in the another embodiment, when the first network device is the ingress device on the forwarding path of the first service, the first accumulated delay obtained by the first network device from the resource reservation packet is the initial accumulated delay; or when the first network device is the transit device or the egress device on the forwarding path of the first service, the first accumulated delay obtained by the first network device from the resource reservation packet is the accumulated delay from the transmitter of the first service to the previous-hop device of the first network device. In the still another embodiment, the first accumulated delay obtained by the first network device from the resource reservation packet is the accumulated delay from the transmitter of the first service to the previous-hop device of the first network device. The accumulated delay corresponding to each network device on the forwarding path of the first service is the accumulated delay from the transmitter of the first service to the network device, and the accumulated delay corresponding to each network device on the forwarding path is equal to a sum of the accumulated delay carried in the resource reservation packet received by the network device and a length of the slot reserved by the network device for the first service.

The maximum tolerable delay of the first service is a maximum delay that is from the transmitter of the first service to a receiver of the first service and that can be tolerated by the first service. The maximum tolerable delay represents a delay requirement of the first service, and the delay requirement is a service level agreement (service level agreement, SLA) requirement. The maximum tolerable delay may be configured in the first network device, or may be carried in a resource reservation packet that is received by the first network device and that is used for slot reservation on the first service. The resource reservation packet is from the transmitter of the first service or from the ingress device on the forwarding path of the first service. In an embodiment, the first network device is the ingress device on the forwarding path of the first service, a user configures the maximum tolerable delay of the first service in the first network device, and the first network device obtains the maximum tolerable delay configured by the user. In another embodiment, the first network device is the ingress device, the transit device, or the egress device on the forwarding path of the first service. A user configures the maximum tolerable delay of the first service at the transmitter of the first service. The transmitter generates a resource reservation packet used for slot reservation on the first service. The resource reservation packet carries the maximum tolerable delay. The transmitter sends the resource reservation packet through the forwarding path. Each network device on the forwarding path obtains the maximum tolerable delay from the resource reservation packet received by the network device, and the first network device obtains the maximum tolerable delay from the resource reservation packet received by the first network device. In still another embodiment, the first network device is the transit device or the egress device on the forwarding path of the first service. A user configures the maximum tolerable delay of the first service in the ingress device on the forwarding path. The ingress device generates a resource reservation packet used for slot reservation on the first service. The resource reservation packet carries the maximum tolerable delay. The ingress device sends the resource reservation packet through the forwarding path. Each network device on the forwarding path obtains the maximum tolerable delay from the resource reservation packet received by the network device, and the first network device obtains the maximum tolerable delay from the resource reservation packet received by the first network device.

In an optional embodiment, the first network device obtains the first accumulated delay and the maximum tolerable delay of the first service from a resource reservation packet used for slot reservation on the first service, and the first accumulated delay and the maximum tolerable delay are carried in a same resource reservation packet. The resource reservation packet may be a RAP packet, and the resource reservation packet further carries an identifier of the first service, characteristic information of the first service, and the like. The identifier of the first service is any possible identification information indicating the first service, for example, a flow identifier, a 5-tuple, a triplet, or a 2-tuple. The characteristic information of the first service includes a service periodicity, a quantity of packets in each periodicity, a maximum packet length, and the like. The quantity of packets in each periodicity is a quantity of service packets of the first service that need to be sent by the transmitter of the first service in one service periodicity, and the maximum packet length is a maximum length of the service packet of the first service.

S302: The first network device obtains a slot forwarding entry of the first network device.

The first network device is the ingress device, the transit device, or the egress device on the forwarding path of the first service. When the first network device is the ingress device or the transit device on the forwarding path of the first service, the first network device generates the slot forwarding entry of the first network device based on an available slot of the first network device and available slot information of a next-hop device of the first network device. When the first network device is the egress device on the forwarding path of the first service, the first network device is directly connected to the receiver of the first service, and the first network device generates the slot forwarding entry of the first network device based on the available slot of the first network device. The following describes an implementation process in which the first network device obtains the slot forwarding entry of the first network device by using two embodiments. For ease of description, the next-hop device of the first network device is referred to as a second network device.

**First embodiment:** The first network device is the ingress device or the transit device on the forwarding path of the first service, and the first network device generates the slot forwarding entry of the first network device based on the available slot of the first network device and available slot information of the second network device.

The first network device may obtain the available slot information of the second network device, where the available slot information indicates an available slot of the second network device. The first network device generates at least one slot forwarding entry of the first network device based on the available slot information and the available slot of the first network device. The at least one slot forwarding entry is in one-to-one correspondence with at least one available slot of the first network device. Each slot forwarding entry includes related information used for slot reservation, and the related information used for slot reservation is used by the first network device to reserve a slot for a service. That the available slot information indicates the available slot of the second network device includes at least one of the following: The available slot information indicates an earliest available slot of the second network device; the available slot information indicates any available slot of the second network device; or the available slot information indicates a plurality of available slots of the second network device, where the plurality of available slots include an earliest available slot of the second network device.

In an optional embodiment, the available slot information of the second network device indicates an available slot in a gate control list of a port that is in the second network device and that is configured to forward the first service. The first network device generates at least one slot forwarding entry of the first network device based on the available slot information and an available slot in a gate control list of a port that is in the first network device and that is configured to forward the first service. The at least one slot forwarding entry is in one-to-one correspondence with at least one available slot in the gate control list of the port that is in the first network device and that is configured to forward the first service. For ease of description, the gate control list of the port that is in the first network device and that is configured to forward the first service is referred to as a first gate control list, and the gate control list of the port that is in the second network device and that is configured to forward the first service is referred to as a second gate control list. Therefore, the at least one slot forwarding entry of the first network device is in one-to-one correspondence with the at least one available slot in the first gate control list, and the at least one slot forwarding entry is used by the first network device to reserve a slot for the first service in the first gate control list. The available slot information of the second network device indicates the available slot in the second gate control list of the second network device. Optionally, that the available slot information indicates the available slot in the second gate control list of the second network device includes at least one of the following: The available slot information indicates an earliest available slot in the second gate control list of the second network device; the available slot information indicates any available slot in the second gate control list of the second network device; or the available slot information indicates a plurality of available slots in the second gate control list of the second network device, where the plurality of available slots include an earliest available slot in the second gate control list. In an embodiment, the available slot information includes a slot bitmap (bitmap). The slot bitmap includes a plurality of bits in one-to-one correspondence with a plurality of slots in the second gate control list. The plurality of slots include an available slot and an unavailable slot. Each of the plurality of bits indicates a state of a corresponding slot. A state of each slot includes an available state or an unavailable state. A state of the available slot is the available state, and a state of the unavailable slot is the unavailable state. The available slot is also referred to as an idle slot, the available state is also referred to as an idle state, and the unavailable state includes at least one of a reserved state and an occupied state. For example, a value of each of the plurality of bits is 1 or 0, "1" indicates that a corresponding slot is available, and "0" indicates that a corresponding slot is unavailable. In this embodiment, the available slot information may further include indication information of the plurality of slots in the second gate control list. The indication information of each slot may be a start moment of the slot, an end moment of the slot, any moment of the slot, or the slot. The plurality of slots are consecutive or nonconsecutive, and the plurality of slots include a second slot. In another embodiment, the available slot information includes indication information of a second slot in the available slot in the second gate control list, and the available slot information indicates that the available slot in the second gate control list includes the second slot. The second slot is an earliest available slot in the second gate control list or any available slot in the second gate control list. The indication information of the second slot is a start moment of the second slot, an end moment of the second slot, any moment of the second slot, or the second slot.

In an optional embodiment, the available slot of the first network device includes a first slot, and the available slot information of the second network device indicates that the available slot of the second network device includes a second slot. For example, the available slot in the first gate control list of the first network device includes the first slot, and the available slot information of the second network device indicates that the available slot in the second gate control list of the second network device includes the second slot. The available slot information further includes an end-to-end delay (end-to-end delay, E2E delay) corresponding to the second slot, and the end-to-end delay corresponding to the second slot is a delay from the second network device to the receiver of the first service. For example, the end-to-end delay corresponding to the second slot is a delay of the first service from the second network device to the receiver of the first service when the second network device forwards the first service in the second slot. The first network device generates, based on the first slot and the end-to-end delay corresponding to the second slot, a slot forwarding entry that is of the first network device and that corresponds to the first slot (where for ease of description, the slot forwarding entry corresponding to the first slot is referred to as a slot forwarding entry 11). In an embodiment, the first network device determines, based on the end-to-end delay corresponding to the second slot, an end-to-end delay corresponding to the first slot, and the first network device generates the slot forwarding entry 11 of the first network device based on the end-to-end delay corresponding to the first slot. The slot forwarding entry 11 includes the end-to-end delay corresponding to the first slot. The end-to-end delay corresponding to the first slot is a delay from the first network device to the receiver of the first service. For example, the end-to-end delay corresponding to the first slot is a delay of the first service from the first network device to the receiver of the first service when the first network device forwards the first service in the first slot. Optionally, the first network device determines a sum of the end-to-end delay corresponding to the second slot and a length of the first slot as the end-to-end delay corresponding to the first slot.

In an optional embodiment, the available slot information of the second network device indicates that the available slot of the second network device includes a second slot. The first network device determines next-hop slot information based on the second slot. The first network device generates a slot forwarding entry 11 of the first network device based on an end-to-end delay corresponding to a first slot and the next-hop slot information. The slot forwarding entry 11 further includes the next-hop slot information. In other words, the slot forwarding entry 11 includes the end-to-end delay corresponding to the first slot and the next-hop slot information. The next-hop slot information indicates the second slot in the available slot of the next-hop device of the first network device. For example, the second slot is the earliest available slot of the next-hop device, and the next-hop slot information is the start moment of the second slot, the end moment of the second slot, any moment of the second slot, or the second slot. In some embodiments, the next-hop slot information is also referred to as next-hop transmission time (next-hop transmission time, NHTT).

In this embodiment of this application, both the end-to-end delay corresponding to the first slot and the next-hop slot information that are included in the slot forwarding entry 11 are related information used for slot reservation, and the information is used by the first network device to reserve the first slot for the first service. Optionally, the slot forwarding entry 11 is a routing and forwarding entry or a flow forwarding entry, the routing and forwarding entry is a layer 2 routing and forwarding entry or a layer 3 routing and forwarding entry, and the slot forwarding entry 11 further includes a destination address and an identifier of an egress port. In an example, the slot forwarding entry 11 of the first network device is shown in the following Table 2.

**Table 2 (Slot forwarding entry 11)**

| Destination address | Egress port | End-to-end delay (in a unit of a microsecond) corresponding to the first slot | Next-hop slot information |
|---|---|---|---|
| DA1 | P1 | D1 | S1 |

Refer to Table 2. The slot forwarding entry 11 of the first network device includes the destination address "DA1" of the first service, the identifier "P1" of the egress port in the first service in the first network device (that is, a port that is in the first network device and that is configured to forward the first service), the end-to-end delay "D1" corresponding to the first slot, and the next-hop slot information "S1". The destination address "DA1" is an address of the receiver of the first service, the first slot is an available slot of the first service in a gate control list (that is, the first gate control list) of the egress port in the first network device, the end-to-end delay "D1" corresponding to the first slot is a delay from the first network device to the receiver of the first service when the first network device forwards the first service in the first slot (that is, a delay from the first network device to the destination address "DA1"), and the next-hop slot information "S1" indicates the second slot in the available slot of the next-hop device (that is, the second network device) of the first network device, and the next-hop slot information "S1" may be the start moment of the second slot, the end moment of the second slot, any moment of the second slot, or the second slot.

The slot forwarding entry 11 shown in Table 2 is associated with the first slot to indicate that the end-to-end delay recorded in the slot forwarding entry 11 is the end-to-end delay corresponding to the first slot. In some embodiments, the slot forwarding entry 11 of the first network device further includes indication information of the first slot. The indication information of the first slot may be the identifier of the first slot, a start moment of the first slot, an end moment of the first slot, any moment of the first slot, or the first slot. In an example, the first slot is T1, the first slot "T1" is a time period between t0 and t1, and the slot forwarding entry 11 of the first network device may alternatively be shown in the following Table 3.

**Table 3 (Slot forwarding entry 11)**

| Destination address | Egress port | Slot (in a unit of a microsecond) | End-to-end delay (in a unit of a microsecond) | Next-hop slot information |
|---|---|---|---|---|
| DA1 | P1 | T1 (for example, t0 to t1) | D1 | S1 |

It can be learned through comparison between Table 2 and Table 3 that, a difference from Table 2 lies in that the slot forwarding entry 11 shown in Table 3 further includes the first slot "T1".

It should be noted that the destination address in the slot forwarding entry 11 shown in Table 2 and Table 3 is an internet protocol (internet protocol, IP) address or a media access control (media access control, MAC) address of the receiver of the first service. Table 2 and Table 3 show only examples of the slot forwarding entry. The slot forwarding entry of the first network device may further include other information. For example, the slot forwarding entry further includes an address of the next-hop device. For another example, the slot forwarding entry is a flow forwarding entry, and the slot forwarding entry further includes flow identification information of the first service. In this embodiment of this application, an example in which the slot forwarding entry is the routing and forwarding entry or the flow forwarding entry is used for description, or an independent slot forwarding entry may be set.

The slot forwarding entry 11 is a slot forwarding entry that is of the first network device and that corresponds to the first slot. The first network device may determine, in a same manner, a slot forwarding entry corresponding to each available slot of the first network device. Optionally, the available slot information of the second network device indicates that the available slot of the second network device includes the second slot, the second slot is an earliest available slot in the second gate control list of the second network device, and the available slot information includes the end-to-end delay corresponding to the second slot. For each available slot in the first gate control list of the first network device, the first network device determines, based on the end-to-end delay corresponding to the second slot, an end-to-end delay corresponding to the available slot, the first network device determines next-hop slot information based on the second slot, and the first network device generates, based on the end-to-end delay corresponding to the available slot and the next-hop slot information, a slot forwarding entry corresponding to the available slot of the first network device, where the slot forwarding entry includes the end-to-end delay corresponding to the available slot and the next-hop slot information. In this manner, the first network device may obtain a plurality of slot forwarding entries in one-to-one correspondence with a plurality of available slots of the first network device. A slot forwarding entry corresponding to each of the plurality of available slots includes an end-to-end delay corresponding to the available slot and next-hop slot information. The end-to-end delay corresponding to each available slot is a delay of the first service from the first network device to the receiver of the first service when the first network device forwards the first service in the available slot, and the end-to-end delay corresponding to each available slot may be a sum of a length of the available slot and the end-to-end delay corresponding to the second slot. The next-hop slot information in each slot forwarding entry indicates the second slot in the second network device. Next-hop slot information included in the plurality of slot forwarding entries is the same. For an implementation process in which the first network device obtains each of the plurality of slot forwarding entries, refer to an implementation process in which the first network device obtains the slot forwarding entry 11. Details are not described herein again. Each of the plurality of slot forwarding entries is shown in Table 2 or Table 3. Optionally, lengths of the plurality of available slots of the first network device are equal, and end-to-end delays recorded in the slot forwarding entries corresponding to the plurality of available slots are equal. This is not limited in embodiments of this application.

**Second embodiment:** The first network device is the egress device on the forwarding path of the first service, and the first network device generates the slot forwarding entry of the first network device based on the available slot of the first network device.

The first network device generates at least one slot forwarding entry based on at least one available slot of the first network device, where the at least one slot forwarding entry is in one-to-one correspondence with the at least one available slot. Optionally, the at least one available slot is an available slot in a first gate control list of the first network device, and the at least one slot forwarding entry is used by the first network device to reserve a slot for the first service in the first gate control list.

In an optional embodiment, the available slot of the first network device includes a first slot. The first network device determines, based on the first slot, an end-to-end delay corresponding to the first slot, and the first network device determines next-hop slot information. The first network device generates, based on the end-to-end delay corresponding to the first slot and the next-hop slot information, a slot forwarding entry 11 that is of the first network device and that corresponds to the first slot, where the slot forwarding entry 11 includes the end-to-end delay corresponding to the first slot and the next-hop slot information. The end-to-end delay corresponding to the first slot is a delay from the first network device to the receiver of the first service. Because the first network device is the egress device on the forwarding path of the first service, and the first network device is directly connected to the receiver of the first service, the end-to-end delay corresponding to the first slot is equal to a length of the first slot, and the next-hop slot information is initial next-hop slot information, that is, an initial value of the next-hop slot information. For example, the next-hop slot information is 0. For example, the slot forwarding entry 11 is shown in the foregoing Table 2 or Table 3. In the second embodiment, the next-hop slot information in the slot forwarding entry 11 is the initial next-hop slot information.

The slot forwarding entry 11 is a slot forwarding entry that is of the first network device and that corresponds to the first slot. The first network device may determine, in a same manner, a slot forwarding entry corresponding to each available slot of the first network device. Optionally, for each available slot in the first gate control list of the first network device, the first network device determines, based on the available slot, an end-to-end delay corresponding to the available slot, and the first network device determines next-hop slot information. The first network device generates, based on the end-to-end delay corresponding to the available slot and the next-hop slot information, a slot forwarding entry corresponding to the available slot of the first network device, where the slot forwarding entry includes the end-to-end delay corresponding to the available slot and the next-hop slot information. In this manner, the first network device may obtain a plurality of slot forwarding entries in one-to-one correspondence with a plurality of available slots of the first network device. A slot forwarding entry corresponding to each of the plurality of available slots includes an end-to-end delay corresponding to the available slot and next-hop slot information. The end-to-end delay corresponding to each available slot is a delay of the first service from the first network device to the receiver of the first service when the first network device forwards the first service in the available slot, the end-to-end delay corresponding to each available slot is equal to a length of the available slot, and next-hop slot information in each slot forwarding entry is the initial next-hop slot information. Optionally, lengths of the plurality of available slots of the first network device are equal, and end-to-end delays recorded in the slot forwarding entries corresponding to the plurality of available slots are equal. This is not limited in embodiments of this application.

S303: The first network device reserves the first slot for the first service based on the maximum tolerable delay of the first service, the first accumulated delay, and the slot forwarding entry of the first network device, where the first slot is an available slot that meets the maximum tolerable delay.

In an optional embodiment, the slot forwarding entry (that is, the slot forwarding entry 11) of the first network device includes the end-to-end delay corresponding to the first slot, and the end-to-end delay corresponding to the first slot is the delay from the first network device to the receiver of the first service, that is, the delay of the first service from the first network device to the receiver of the first service when the first network device forwards the first service in the first slot. The first network device reserves the first slot for the first service in the first gate control list based on the maximum tolerable delay of the first service, the first accumulated delay, and the end-to-end delay corresponding to the first slot. In an embodiment, the first network device determines, based on the first accumulated delay and the end-to-end delay corresponding to the first slot, whether the first slot meets the maximum tolerable delay. When the first slot meets the maximum tolerable delay, the first network device reserves the first slot for the first service; or when the first slot does not meet the maximum tolerable delay, the first network device does not reserve the first slot for the first service. In this embodiment of this application, an example in which the first slot meets the maximum tolerable delay is used for description. Therefore, the first network device reserves the first slot for the first service.

In an optional embodiment, that the first network device determines, based on the first accumulated delay and the end-to-end delay corresponding to the first slot, whether the first slot meets the maximum tolerable delay of the first service includes: The first network device determines whether a sum of the first accumulated delay and the end-to-end delay corresponding to the first slot is greater than the maximum tolerable delay. When the sum of the first accumulated delay and the end-to-end delay corresponding to the first slot is not greater than the maximum tolerable delay, the first network device determines that the first slot meets the maximum tolerable delay; or when the sum of the first accumulated delay and the end-to-end delay corresponding to the first slot is greater than the maximum tolerable delay, the first network device determines that the first slot does not meet the maximum tolerable delay.

In an optional embodiment, the slot forwarding entry (that is, the slot forwarding entry 11) of the first network device further includes next-hop slot information, and the next-hop slot information indicates the second slot in the available slot of the next-hop device of the first network device. The first network device reserves the first slot for the first service in the first gate control list based on the maximum tolerable delay of the first service, the first accumulated delay, the end-to-end delay corresponding to the first slot, and the next-hop slot information. In an embodiment, the first network device determines, based on the first accumulated delay and the end-to-end delay corresponding to the first slot, whether the first slot meets the maximum tolerable delay of the first service, and the first network device determines whether the first slot is before the second slot indicated by the next-hop slot information. When the first slot meets the maximum tolerable delay and the first slot is before the second slot, the first network device reserves the first slot for the first service; or when the first slot does not meet the maximum tolerable delay and/or the first slot is not before the second slot, the first network device does not reserve the first slot for the first service. In this embodiment of this application, an example in which the first slot meets the maximum tolerable delay and the first slot is before the second slot is used for description. Therefore, the first network device reserves the first slot for the first service.

In an optional embodiment, before S303, the first network device obtains first expected slot information, where the first expected slot information indicates a slot that the first network device is expected to reserve for the first service. In S303, the first network device reserves the first slot for the first service in the first gate control list based on the maximum tolerable delay of the first service, the first accumulated delay, the first expected slot information, and the slot forwarding entry (that is, the slot forwarding entry 11) of the first network device. An example in which the slot forwarding entry (that is, the slot forwarding entry 11) of the first network device includes the end-to-end delay corresponding to the first slot and the next-hop slot information is used for description. In an embodiment, the first network device determines, based on the first accumulated delay and the end-to-end delay corresponding to the first slot, whether the first slot meets the maximum tolerable delay of the first service, the first network device determines whether the first slot is before the second slot indicated by the next-hop slot information, and the first network device determines, based on the first expected slot information, the slot that the first network device is expected to reserve for the first service (where for ease of description, the slot that the first network device is expected to reserve for the first service is referred to as a first expected slot). When the first slot meets the maximum tolerable delay and the first slot is before the second slot, the first network device determines whether the first slot is the first expected slot. When the first slot is the first expected slot, the first network device reserves the first slot for the first service; or when the first slot is not the first expected slot, the first network device determines whether the first expected slot is available. If the first expected slot is unavailable, the first network device reserves the first slot for the first service; or if the first expected slot is available, the first network device does not reserve the first slot for the first service. When the first slot does not meet the maximum tolerable delay and/or the first slot is not before the second slot, the first network device does not reserve the first slot for the first service. In other words, when the first slot meets the maximum tolerable delay of the first service, the first slot is before the second slot, and the first slot is the first expected slot, or when the first slot meets the maximum tolerable delay, the first slot is before the second slot, the first slot is not the first expected slot, and the first expected slot is unavailable, the first network device reserves the first slot for the first service. When the first slot does not meet the maximum tolerable delay and/or the first slot is not before the second slot, the first network device does not reserve the first slot for the first service. When the first slot meets the maximum tolerable delay, the first slot is before the second slot, the first slot is not the first expected slot, and the first expected slot is available, the first network device may not reserve the first slot for the first service. In this embodiment of this application, an example in which the first slot meets the maximum tolerable delay of the first service, the first slot is before the second slot, and the first slot is the first expected slot is used for description, or an example in which the first slot meets the maximum tolerable delay, the first slot is before the second slot, the first slot is not the first expected slot, and the first expected slot is unavailable is used for description. Therefore, the first network device reserves the first slot for the first service.

In an optional embodiment, the first gate control list includes at least one available slot, the first network device includes at least one slot forwarding entry in one-to-one correspondence with the at least one available slot, and the first network device reserves the first slot for the first service in the first gate control list based on the maximum tolerable delay of the first service, the first accumulated delay, the first expected slot information, and the at least one slot forwarding entry. An example in which a slot forwarding entry corresponding to each of the at least one available slot includes an end-to-end delay and next-hop slot information that correspond to the available slot, and next-hop slot information included in the at least one slot forwarding entry indicates the second slot in the available slot of the second network device is used for description. In an embodiment, the first network device determines the first expected slot based on the first expected slot information, and the first network device determines whether the first expected slot is available. When the first expected slot is available, the at least one slot forwarding entry includes a slot forwarding entry corresponding to the first expected slot. The first network device determines, based on the first accumulated delay and an end-to-end delay included in the slot forwarding entry corresponding to the first expected slot (that is, an end-to-end delay corresponding to the first expected slot), whether the first expected slot meets the maximum tolerable delay of the first service, and the first network device determines whether the first expected slot is before the second slot. When the first expected slot meets the maximum tolerable delay and the first expected slot is before the second slot, the first network device reserves the first expected slot for the first service; or when the first expected slot does not meet the maximum tolerable delay and/or the first expected slot is not before the second slot, the first network device does not reserve the first expected slot for the first service. When the first expected slot is unavailable, or when the first expected slot is available and the first expected slot does not meet the maximum tolerable delay and/or the first expected slot is not before the second slot, the first network device determines whether an available slot that is before the second slot and that meets the maximum tolerable delay exists in the first gate control list. When the available slot that is before the second slot and that meets the maximum tolerable delay exists in the first gate control list, the first network device reserves, for the first service in the first gate control list, the available slot that is before the second slot and that meets the maximum tolerable delay; otherwise, the first network device determines that the first network device fails to reserve a slot for the first service. Optionally, the first expected slot is before the second slot and the first expected slot is unavailable, or the first expected slot is before the second slot and the first expected slot does not meet the maximum tolerable delay of the first service. The first network device determines whether an available slot that is between the first expected slot and the second slot (that is, after the first expected slot and before the second slot) and that meets the maximum tolerable delay exists in the first gate control list. If the available slot that is between the first expected slot and the second slot and that meets the maximum tolerable delay exists in the first gate control list, the first network device reserves, for the first service, the available slot that is between the first expected slot and the second slot and that meets the maximum tolerable delay; otherwise, the first network device determines that the first network device fails to reserve a slot for the first service. Optionally, a plurality of available slots that are between the first expected slot and the second slot and that meet the maximum tolerable delay exist in the first gate control list. The first network device reserves a slot for the first service in the plurality of available slots in ascending order of proximity to the second slot. In other words, the first network device preferentially reserves a slot close to the second slot for the first service. In this way, an earlier slot may be reserved for a more urgent service. In this embodiment, the slot reserved by the first network device for the first service is the first slot.

In an optional embodiment, that the first network device determines, based on the first accumulated delay and the end-to-end delay corresponding to the first expected slot, whether the first expected slot meets the maximum tolerable delay of the first service includes: The first network device determines whether a sum of the first accumulated delay and the end-to-end delay corresponding to the first expected slot is greater than the maximum tolerable delay. When the sum of the first accumulated delay and the end-to-end delay corresponding to the first expected slot is not greater than the maximum tolerable delay, the first network device determines that the first expected slot meets the maximum tolerable delay; or when the sum of the first accumulated delay and the end-to-end delay corresponding to the first expected slot is greater than the maximum tolerable delay, the first network device determines that the first expected slot does not meet the maximum tolerable delay. In this embodiment of this application, that the first expected slot is available includes that the first expected slot is in the idle state, that the first expected slot is unavailable includes that the first expected slot is in the unavailable state, and the unavailable state includes the reserved state or the occupied state. Optionally, before the first service arrives, the first network device reserves the first expected slot for another service, and updates a state of the first expected slot to the unavailable state (for example, the reserved state). As a result, the first expected slot is unavailable for the first service, and the first network device determines, based on the state of the first expected slot, that the first expected slot is unavailable. This is not limited in embodiments of this application.

In an optional embodiment, that the first network device determines whether the available slot that is between the first expected slot and the second slot and that meets the maximum tolerable delay exists in the first gate control list includes: The first network device determines, based on the first expected slot and the second slot, whether the available slot between the first expected slot and the second slot exists in the first gate control list. When the available slot between the first expected slot and the second slot does not exist in the first gate control list, the first network device determines that the available slot that is between the first expected slot and the second slot and that meets the maximum tolerable delay does not exist in the first gate control list. When at least one available slot between the first expected slot and the second slot exists in the first gate control list, the first network device determines whether an available slot that meets the maximum tolerable delay of the first service exists in the at least one available slot. If the available slot that meets the maximum tolerable delay does not exist in the at least one available slot, the first network device determines that the available slot that is between the first expected slot and the second slot and that meets the maximum tolerable delay does not exist in the first gate control list; or if the available slot that meets the maximum tolerable delay exists in the at least one available slot, the first network device determines that the available slot that is between the first expected slot and the second slot and that meets the maximum tolerable delay exists in the first gate control list. Optionally, for each of the at least one available slot, the first network device determines whether a sum of the first accumulated delay and an end-to-end delay corresponding to the available slot is greater than the maximum tolerable delay of the first service. When the sum of the first accumulated delay and the end-to-end delay corresponding to the available slot is not greater than the maximum tolerable delay, the first network device determines that the available slot meets the maximum tolerable delay; or when the sum of the first accumulated delay and the end-to-end delay corresponding to the available slot is greater than the maximum tolerable delay, the first network device determines that the available slot does not meet the maximum tolerable delay.

The following describes an implementation process in which the first network device obtains the first expected slot information. As described above, the first network device is the ingress device, the transit device, or the egress device on the forwarding path of the first service. When the first network device is the ingress device on the forwarding path of the first service, the first expected slot information is initial expected slot information, and the first expected slot information indicates an initial expected slot. When the first network device is the transit device or the egress device on the forwarding path of the first service, the first expected slot information indicates a slot that the previous-hop device of the first network device expects the first network device to reserve for the first service. In this embodiment of this application, the first expected slot information may be configured in the first network device, or may be carried in a resource reservation packet that is received by the first network device and that is used for slot reservation on the first service. The resource reservation packet is from the transmitter of the first service or from the ingress device on the forwarding path of the first service. In an embodiment, the first network device is the ingress device on the forwarding path of the first service, a user configures the first expected slot information (that is, the initial expected slot information) in the first network device, and the first network device obtains the first expected slot information configured by the user. In another embodiment, the first network device is the ingress device, the transit device, or the egress device on the forwarding path of the first service. A user configures the initial expected slot information at the transmitter of the first service. The transmitter generates a resource reservation packet used for slot reservation on the first service. The resource reservation packet carries the initial expected slot information. The transmitter sends the resource reservation packet through the forwarding path, each network device on the forwarding path reserves a slot for the first service based on the resource reservation packet received by the network device, obtains, based on the slot reserved by the network device for the first service, expected slot information corresponding to the network device, and updates, by using the expected slot information corresponding to the network device, the expected slot information carried in the resource reservation packet. The first network device obtains the first expected slot information from the resource reservation packet received by the first network device. In still another embodiment, the first network device is the transit device or the egress device on the forwarding path of the first service. A user configures initial expected slot information in the ingress device on the forwarding path. The ingress device generates a resource reservation packet used for slot reservation on the first service. The resource reservation packet carries the initial expected slot information. The ingress device reserves a slot for the first service based on the resource reservation packet. The ingress device obtains, based on the slot reserved by the ingress device for the first service, expected slot information corresponding to the ingress device, and updates, by using the expected slot information corresponding to the ingress device, the expected slot information carried in the resource reservation packet. The ingress device sends an updated resource reservation packet through the forwarding path. Each network device in the transit device and the egress device on the forwarding path reserve a slot for the first service based on the resource reservation packet received by the network device, obtains, based on the slot reserved by the network device for the first service, expected slot information corresponding to the network device, and updates, by using the expected slot information corresponding to the network device, the expected slot information carried in the resource reservation packet. The first network device obtains the first expected slot information from the resource reservation packet received by the first network device. It may be understood that, in the another embodiment, when the first network device is the ingress device on the forwarding path of the first service, the first expected slot information obtained by the first network device from the resource reservation packet is the initial expected slot information; or when the first network device is the transit device or the egress device on the forwarding path of the first service, the first expected slot information obtained by the first network device from the resource reservation packet indicates the slot that the previous-hop device of the first network device expects the first network device to reserve for the first service. In the still another embodiment, the first expected slot information obtained by the first network device from the resource reservation packet indicates the slot that the previous-hop device of the first network device expects the first network device to reserve for the first service. Optionally, that each network device obtains, based on the slot reserved by the network device for the first service, the expected slot information corresponding to the network device includes: The network device determines that a slot that the network device expects a next-hop device to reserve for the first service is adjacent to the slot reserved by the network device for the first service and is after the slot reserved by the network device for the first service. The expected slot information corresponding to each network device may be a start moment of the slot that the network device expects the next-hop device to reserve for the first service, an end moment of the slot that the network device expects the next-hop device to reserve for the first service, any moment of the slot that the network device expects the next-hop device to reserve for the first service, or the slot that the network device expects the next-hop device to reserve for the first service. Optionally, the expected slot information corresponding to each network device is the start moment of the slot that the network device expects the next-hop device to reserve for the first service, and the expected slot information is also referred to as expected next-hop slot start time (expected next-hop slot start time, ENHSST).

In an optional embodiment, the first expected slot information, the first accumulated delay, and the maximum tolerable delay of the first service are carried in a same resource reservation packet. The resource reservation packet further carries the characteristic information of the first service. The characteristic information includes a service periodicity, a quantity of packets in each periodicity, a maximum packet length, and the like. The first network device determines, based on the characteristic information of the first service, a rate of a port that is in the first network device and that is configured to forward the first service (where for example, the port that is in the first network device and that is configured to forward the first service is referred to as a first port), and a length of a slot in the first gate control list of the first network device, a target quantity of slots that the first service needs to occupy within each service periodicity. The first network device reserves the target quantity of slots for the first service in the first gate control list based on the first accumulated delay, the maximum tolerable delay of the first service, and the slot forwarding entry of the first network device. For a reservation process of each slot, refer to the foregoing descriptions in S303. Details are not described herein again. Optionally, the first network device determines, based on the maximum packet length of the first service and the quantity of packets of the first service in each periodicity, an amount of data of the first service that needs to be forwarded through the first port in each service periodicity. The first network device determines, based on the amount of data of the first service that needs to be forwarded through the first port in each service periodicity and a rate of the first port, duration in which the first service occupies the first port in each service periodicity. The first network device determines, based on the duration in which the first service occupies the first port in each service periodicity and the length of the slot in the first gate control list, the target quantity of slots that need to be occupied by the first service in each service periodicity.

It should be noted that both S301 and S302 are performed before S303. An execution sequence of S301 and S302 is not limited in embodiments of this application. During actual application, S302 may be performed before S301, and an execution frequency of S302 may be lower than an execution frequency of S301. Optionally, the first network device performs S301 each time the first network device reserves a slot for the first service, and the first network device performs S302 when a specific condition is met. For example, the first network device performs S302 when a service arrives or a network topology changes.

In conclusion, according to the technical solution provided in this embodiment of this application, the network device on the forwarding path of the first service reserves the slot for the first service based on the accumulated delay, the maximum tolerable delay of the first service, and the slot forwarding entry of the network device. In this case, after the first service arrives, the network device on the forwarding path of the first service forwards the first service through the slot reserved for the first service. In this way, transmission quality of the first service is ensured. In particular, when the first service is a deterministic service, deterministic transmission quality of the first service is ensured. For example, a deterministic delay of the first service is ensured. The resource reservation solution provided in this embodiment of this application is a distributed resource reservation solution. A slot can be reserved for a service without a need for a controller to perform slot orchestration on a network device. Therefore, flexibility is high, and the solution is applicable to a network scenario without a controller.

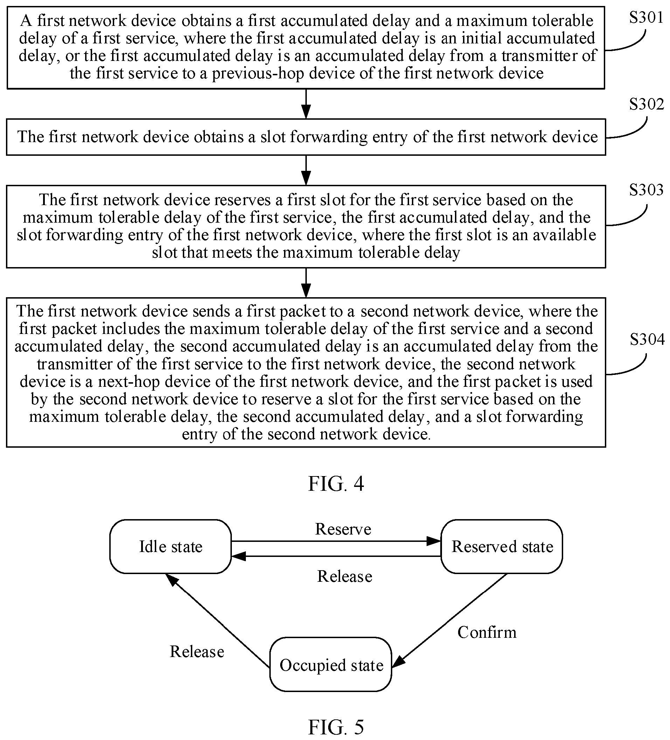

In an optional embodiment, the first network device is the ingress device or the transit device on the forwarding path of the first service. After S303, the first network device sends a resource reservation packet to the next-hop device of the first network device, so that the next-hop device of the first network device reserves a slot for the first service based on the resource reservation packet. In an example, FIG. 4 is a flowchart of another resource reservation method according to an embodiment of this application. As shown in FIG. 4, after S303, the resource reservation method further includes the following step S304.

S304: The first network device sends a first packet to the second network device, where the first packet includes the maximum tolerable delay of the first service and a second accumulated delay, the second accumulated delay is an accumulated delay from the transmitter of the first service to the first network device, the second network device is the next-hop device of the first network device, and the first packet is used by the second network device to reserve a slot for the first service based on the maximum tolerable delay, the second accumulated delay, and a slot forwarding entry of the second network device.

The first packet is a resource reservation packet used for slot reservation on the first service. For example, the first packet is a RAP packet.

In an optional embodiment, the first packet includes the maximum tolerable delay of the first service, the second accumulated delay, and second expected slot information, the second expected slot information indicates a slot that the first network device expects the second network device to reserve for the first service, and the first packet is used by the second network device to reserve a slot for the first service based on the maximum tolerable delay of the first service, the second accumulated delay, the second expected slot information, and the slot forwarding entry of the second network device. For ease of description, the slot that the first network device expects the second network device to reserve for the first service is referred to as a second expected slot. The second expected slot information is a start moment of the second expected slot, an end moment of the second expected slot, any moment of the second expected slot, or the second expected slot. The second expected slot is after the first slot reserved by the first network device for the first service. Optionally, the second expected slot is adjacent to the first slot, and the start moment of the second expected slot is the end moment of the first slot.

In an optional embodiment, the first network device determines the second accumulated delay based on the first accumulated delay and the first slot reserved by the first network device for the first service, the first network device determines the second expected slot information based on the first slot reserved by the first network device for the first service, and the first network device obtains the first packet based on the second accumulated delay and the second expected slot information. Optionally, the first network device determines a sum of the first accumulated delay and the length of the first slot as the second accumulated delay, the first network device determines a second expected slot based on the first slot, and the first network device determines the second expected slot information indicating the second expected slot. In an embodiment, the first network device is the ingress device on the forwarding path of the first service. In S301, the first network device obtains the first accumulated delay configured by the user and the maximum tolerable delay of the first service configured by the user. In this step, the first network device generates the first packet based on the maximum tolerable delay, the second accumulated delay, and the second expected slot information. In another embodiment, the first network device is the ingress device, the transit device, or the egress device on the forwarding path of the first service. In S301, the first network device obtains the first accumulated delay and the maximum tolerable delay of the first service from the resource reservation packet used for slot reservation on the first service. Before S303, the first network device obtains the first expected slot information from the resource reservation packet. In this step, the first network device updates, by using the second accumulated delay, the accumulated delay (that is, the first accumulated delay) carried in the resource reservation packet, and the first network device updates, by using the second expected slot information, the expected slot information (that is, the first expected slot information) carried in the resource reservation packet, where an updated resource reservation packet obtained by the first network device by updating the resource reservation packet is the first packet. For example, the first network device replaces, with the second accumulated delay, the first accumulated delay carried in the resource reservation packet, and the first network device replaces, with the second expected slot information, the first expected slot information carried in the resource reservation packet. Optionally, the first packet further includes a service identifier of the first service, characteristic information of the first service, and the like.

After the second network device receives the first packet sent by the first network device, the second network device reserves the slot for the first service based on the first packet and the slot forwarding entry of the second network device. In an embodiment, the first packet includes the maximum tolerable delay of the first service and the second accumulated delay, and the second network device reserves the slot for the first service based on the maximum tolerable delay, the second accumulated delay, and the slot forwarding entry of the second network device. In another embodiment, the first packet includes the maximum tolerable delay, the second accumulated delay, and the second expected slot information of the first service, and the second network device reserves the slot for the first service based on the maximum tolerable delay, the second accumulated delay, the second expected slot information, and the slot forwarding entry of the second network device. For an implementation process in which the second network device obtains the slot forwarding entry of the second network device, refer to S302. For an implementation process in which the second network device reserves the slot for the first service, refer to S303. Details are not described in embodiments of this application again.

In conclusion, according to the technical solution provided in this embodiment of this application, after the first network device on the forwarding path of the first service reserves the slot for the first service, the first network device sends the first packet including the maximum tolerable delay of the first service and the second accumulated delay to the next-hop device of the first network device, so that the next-hop device reserves the slot for the first service based on the maximum tolerable delay, the second accumulated delay, and the slot forwarding entry of the next-hop device. After the first service arrives, the next-hop device forwards the first service through the slot reserved for the first service. In this way, transmission quality of the first service is ensured. In particular, when the first service is a deterministic service, deterministic transmission quality of the first service is ensured.

In this embodiment of this application, each network device on the forwarding path of the first service may reserve a slot for the first service. For an implementation process in which each network device on the forwarding path reserves the slot for the first service, refer to an implementation process in which the first network device reserves the slot for the first service. The slot reserved by each network device on the forwarding path for the first service meets the maximum tolerable delay of the first service. In an optional embodiment, in a process in which any network device on the forwarding path reserves a slot for the first service, if the network device determines that an available slot that meets the maximum tolerable delay of the first service does not exist in a gate control list of a port that is in the network device and that is configured to forward the first service, the network device determines that the network device fails to reserve a slot for the first service, and the network device sends a notification packet (also referred to as a cancellation packet) to the transmitter of the first service or the ingress device on the forwarding path through a reverse path of the forwarding path, to notify the transmitter or the ingress device that the slot fails to be reserved for the first service. The network device that has reserved the slot for the first service and that is on the forwarding path releases, based on the notification packet, the slot reserved for the first service. For example, the network device that has reserved the slot for the first service and that is on the forwarding path updates, based on the notification packet, a state of the slot reserved for the first service to the idle state, to release the slot reserved for the first service. In an embodiment, the egress device on the forwarding path fails to reserve a slot for the first service, the egress device sends a notification packet through the reverse path of the forwarding path, and both the transit device and the ingress device on the forwarding path update, based on the notification packet, states of the slots reserved for the first service to the idle state, to release the slots reserved for the first service.

In an optional embodiment, a resource reservation packet used for slot reservation on the first service is transmitted along the forwarding path of the first service. Each network device on the forwarding path reserves, based on an accumulated delay, a maximum tolerable delay, and expected slot information that are carried in the resource reservation packet received by the network device and a slot forwarding entry of the network device, a slot for the first service in an available slot in a gate control list of a port that is in the network device and that is configured to forward the first service. After reserving the slot for the first service, each network device on the forwarding path updates the accumulated delay and the expected slot information that are carried in the resource reservation packet, and sends an updated resource reservation packet to a next-hop device of the network device. A state of the available slot is the available state, the available slot is an unoccupied slot in the gate control list, the available slot is also referred to as an idle slot, and the available state is also referred to as the idle state. After each network device in the ingress device and the transit device on the forwarding path of the first service reserves the slot for the first service, the network device updates the state of the slot reserved by the network device for the first service to the reserved state. After the egress device on the forwarding path reserves the slot for the first service, the egress device updates a state of the slot reserved by the network device for the first service to the occupied state. The egress device sends an acknowledgment packet through the reverse path of the forwarding path. The ingress device and the transit device on the forwarding path update the states of the slots reserved for the first service to the occupied state based on the acknowledgment packet. Optionally, after reserving the slot for the first service, the network device on the forwarding path further updates queue state information corresponding to a first queue in a plurality of pieces of queue state information corresponding to the slot reserved for the first service in the gate control list to open state information, to indicate that the first queue is in an open state in the slot reserved for the first service. The first queue is a packet queue used to buffer the first service. In other words, after reserving the slot for the first service, each network device on the forwarding path updates the gate control list of the network device. In an embodiment, after reserving the slot for the first service, the egress device on the forwarding path updates queue state information corresponding to the first queue in a plurality of pieces of queue state information corresponding to the slot reserved for the first service in a gate control list to open state information, and each network device in the ingress device and the transit device on the forwarding path updates, based on an acknowledgment packet sent by the egress device, queue state information corresponding to the first queue in a plurality of pieces of queue state information corresponding to the slot reserved for the first service in the gate control list to the open state information. In an embodiment, the network device on the forwarding path includes a control plane and a forwarding plane (also referred to as a control chip and a forwarding chip). The control plane reserves a slot for the first service. After reserving the slot for the first service, the control plane updates a gate control list, and delivers an updated gate control list to the forwarding plane. Subsequently, the forwarding plane forwards the packet of the first service based on the updated gate control list, so that the packet of the first service is forwarded through the slot reserved for the first service.

After all the network devices on the forwarding path of the first service successfully reserve the slots for the first service, for example, after all the network devices on the forwarding path update the states of the slots reserved for the first service to the occupied state, a process of reserving the slot for the first service ends. After the first service arrives, the network device on the forwarding path forwards the packet of the first service through the slot reserved for the first service, to ensure transmission quality of the first service. In an optional embodiment, after the first service leaves, the network device on the forwarding path of the first service releases the slot reserved for the first service. For example, the network device on the forwarding path updates the state of the slot reserved for the first service to the idle state, to release the slot reserved for the first service. In an example, after the first service leaves, the transmitter of the first service or the ingress device on the forwarding path of the first service sends a resource release packet through the forwarding path, and the network device on the forwarding path updates, based on the resource release packet, the state of the slot reserved for the first service to the idle state, to release the slot reserved for the first service. In another example, after the first service leaves, the receiver of the first service or the egress device on the forwarding path of the first service sends a resource release packet through the reverse path of the forwarding path, and the network device on the forwarding path updates, based on the resource release packet, the state of the slot reserved for the first service to the idle state, to release the slot reserved for the first service. The resource release packet may be a RAP packet. In an embodiment, the resource release packet includes the identifier of the first service, and the network device on the forwarding path of the first service determines, based on the identifier of the first service, that the resource release packet is used to release the slot reserved for the first service, to release the slot reserved for the first service. In another embodiment, the resource release packet includes related information of a resource reservation packet used for slot reservation on the first service, for example, includes a sequence number of the resource reservation packet. The network device on the forwarding path of the first service determines, based on the related information that is of the resource reservation packet used to reserve the slot for the first service and that is included in the resource release packet, that the resource release packet is used to release the slot reserved for the first service, to release the slot reserved for the first service. After releasing the slot reserved for the first service, the network device may update the slot forwarding entry of the network device and the gate control list of the network device. For example, the network device deletes a related slot forwarding entry of the network device, or deletes an end-to-end delay and next-hop slot information in a related slot forwarding entry of the network device. The network device updates queue state information corresponding to the first queue (used to buffer the packet queue of the first service) in a plurality of queue state information corresponding to the slot reserved for the first service in the gate control list to closed state information, to indicate that the first queue is in a closed state in the slot.

Based on the foregoing descriptions, it may be understood that in this embodiment of this application, a state of a slot may be switched between the idle state, the reserved state, and the occupied state. For example, FIG. 5 is a diagram of state switching of a slot according to an embodiment of this application. Refer to FIG. 5. With reference to the foregoing descriptions, it can be learned that, as a slot is reserved, acknowledged, and released, a state of the slot is switched between the idle state, the reserved state, and the occupied state.

In this embodiment of this application, after reserving the slot for the first service, the network device on the forwarding path of the first service updates the state of the slot reserved for the first service to the reserved state. This can prevent the network device on the forwarding path from allocating the slot reserved for the first service to another service before each network device on the forwarding path successfully reserves a slot for the first service, for example, before the network device on the forwarding path updates a state of the slot reserved for the first service to the occupied state, to avoid a slot conflict between slots reserved for different services.

In this embodiment of this application, the network device may initialize the gate control list of the network device before reserving the slot for the first service in the gate control list of the port configured to forward the first service. For example, the network device initializes the gate control list of the network device after accessing a network. The network device may initialize the gate control list of the network device based on user configuration information, or may initialize the gate control list as a default gate control list. A length of a gate control list (that is, a quantity of slots in the gate control list) of any port in any network device, a length of each slot in the gate control list, and the like may be set based on a rate of the port, a length of a packet that needs to be forwarded through the port, and the like. By default, gate control lists of ports in network devices are the same. For example, lengths of the gate control lists of the ports are equal, and lengths of slots in the gate control lists of the ports are equal. In an embodiment, a length of a slot in a gate control list of a port is set based on a length of a packet that needs to be forwarded through the port. In a scenario of a small packet, the length of the slot in the gate control list is set to a small value, or in a scenario of a large packet, the length of the slot in the gate control list is set to a large value. To be specific, if the packet that needs to be forwarded through the port is a small packet (for example, the length of the packet is less than a preset length), the length of the slot in the gate control list of the port is set to a small value; or if the packet that needs to be forwarded through the port is a large packet (for example, the length of the packet is greater than a preset length), the length of the slot in the gate control list of the port is set to a large value. In another embodiment, a length of a slot in a gate control list of a port is set based on a rate of the port. If the rate of the port is large, the length of the slot in the gate control list of the port is set to a small value; or if the rate of the port is small, the length of the slot in the gate control list of the port is set to a large value. Optionally, after accessing the network, the network device further initializes a forwarding table, a routing table, a flow table, and the like of the network device. This is not limited in embodiments of this application.

In this embodiment of this application, the second network device synchronizes the available slot information of the second network device to the first network device periodically or based on event triggering. For example, the second network device synchronizes the available slot information of the second network device to the first network device when a service arrives, a service leaves, or a network topology changes. In S302, the first network device receives the available slot information synchronized by the second network device. In an embodiment, the second network device sends a second packet to the first network device, where the second packet includes the available slot information, and the first network device receives the second packet sent by the second network device. Because the available slot information of the second network device indicates the available slot of the second network device, the second packet indicates the available slot of the second network device. For example, the available slot information indicates the available slot in the second gate control list of the second network device. Therefore, the second packet indicates the available slot in the second gate control list. Optionally, the available slot information indicates that the available slot of the second network device includes the second slot. Therefore, the second packet indicates that the available slot of the second network device includes the second slot. The second slot may be an available slot in the second gate control list. For example, the second slot is the earliest available slot in the second gate control list.

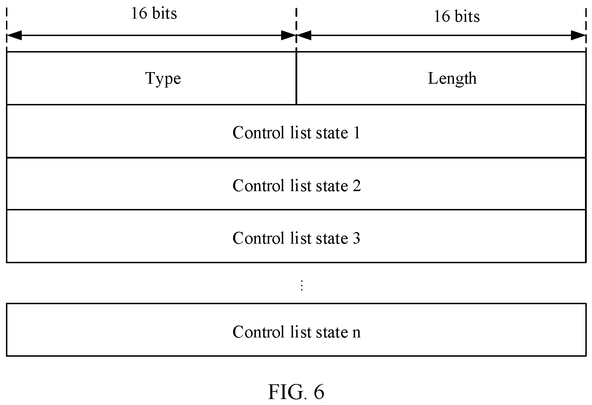

In an optional embodiment, the second packet is an ISIS packet or an LRP packet. In an embodiment, the second packet is the ISIS packet, the second packet includes a router capability (router capability) TLV field, and the router capability TLV field is used to carry the available slot information of the second network device. For example, the router capability TLV field is a 242 router capability TLV field. Optionally, the router capability TLV field includes a sub-TLV (sub-TLV) field, and the sub-TLV field is used to carry the available slot information. For example, the sub-TLV field is shown in FIG. 6. The sub-TLV field may be referred to as a control list state (control list state) sub-TLV field. The sub-TLV field includes a type space, a length space, and n control list state spaces. The type space indicates a type of the sub-TLV field, the length space indicates a length of a data space in the sub-TLV field (that is, a remaining space other than the type space and the length space in the sub-TLV field), and each of the n control list state spaces is used to carry related information of one slot, where n is a positive integer. In an embodiment, the available slot information of the second network device includes a slot bitmap, the slot bitmap includes n bits in one-to-one correspondence with n slots in the second gate control list, the n slots include an available slot and an unavailable slot, each of the n bits indicates a state of the corresponding slot, the available slot information further includes an end-to-end delay corresponding to each of the n slots, the n control list state spaces are in one-to-one correspondence with the n slots, each of the n control list state spaces includes a slot subspace, a state subspace, and a delay subspace, the slot subspace is used to carry indication information of the corresponding slot, the state subspace is used to carry the state of the corresponding slot, and the delay subspace is used to carry the end-to-end delay corresponding to the corresponding slot. For example, a control list state space 1 is used to carry related information of the second slot, a slot subspace in the control list state space 1 is used to carry the indication information of the second slot, a state subspace in the control list state space 1 is used to carry a state of the second slot, and a delay subspace in the control list state space 1 is used to carry the end-to-end delay corresponding to the second slot. This embodiment is described by using an example in which the available slot information synchronized by the second network device to the first network device indicates the available slot and an unavailable slot of the second network device. In another embodiment, the available slot information synchronized by the second network device to the first network device indicates the available slot of the second network device and does not indicate the unavailable slot of the second network device. To be specific, the second network device synchronizes related information of the available slot of the second network device to the first network device and does not synchronize related information of the unavailable slot of the second network device to the first network device. In this embodiment, n slots in the second gate control list are all available slots, the available slot information further includes an end-to-end delay corresponding to each of the n slots, the n control list state spaces are in one-to-one correspondence with the n slots, each of the n control list state spaces includes a slot subspace and a delay subspace, the slot subspace is used to carry indication information of a corresponding slot, and the delay subspace is used to carry an end-to-end delay corresponding to the corresponding slot. For example, a slot subspace in a control list state space 1 is used to carry indication information of the second slot, and a delay subspace in the control list state space 1 is used to carry the end-to-end delay corresponding to the second slot. When n is equal to 1, the control list state sub-TLV field is used to carry related information of the slot of the second network device. For example, the control list state sub-TLV field is used to carry indication information of the earliest available slot (where for example, the second slot is the earliest available slot) in the second gate control list and an end-to-end delay corresponding to the earliest available slot. In addition, in this embodiment of this application, an example in which the ISIS packet carries the available slot information of the second network device is used for description. Alternatively, a field shown in FIG. 6 may be extended in the LRP packet to carry the available slot information of the second network device.

In an optional embodiment, the second network device obtains the available slot information of the second network device, and the second network device generates the second packet based on the available slot information, and sends the first packet to the first network device. Optionally, the available slot information includes a slot bitmap, the slot bitmap includes n bits in one-to-one correspondence with n slots in the second gate control list, and each of the n bits indicates a state of a corresponding slot. The second network device generates the slot bitmap based on the n slots in the second gate control list and queue state information corresponding to the n slots. In an embodiment, packet queues of a port (that is, a port corresponding to the second gate control list) that is in the second network device and that is configured to forward the first service are all packet queues used to buffer a critical service. For each of the n slots, the second network device performs a NOR operation on all queue state information corresponding to the slot, to obtain a state of the slot. The second network device generates the slot bitmap based on the states of the n slots. For example, for each of the n slots, the queue state information corresponding to the slot includes open state information and closed state information. The second network device uses a binary number "1" to represent the open state information corresponding to the slot, and uses a binary number "0" to represent the closed state information corresponding to the slot. The second network device may obtain queue state information that corresponds to the slot and that is represented by a binary number, the second network device performs a NOR operation on all queue state information that corresponds to the slot and that is represented by binary numbers, to obtain the state of the slot. In another embodiment, packet queues of a port that is in the second network device and that is configured to forward a first service include a packet queue used to buffer a non-critical service and a packet queue used to buffer a critical service (where for example, the packet queue used to buffer the critical service is referred to as a critical packet queue, and the packet queue used to buffer the non-critical service is referred to as a non-critical packet queue). For each of the n slots, the second network device determines a state of the slot based on queue state information of a non-critical packet queue corresponding to the slot, and the second network device generates the slot bitmap based on the states of the n slots. For example, for each of the n slots, the queue state information of the non-critical packet queue corresponding to the slot is open state information or closed state information. The second network device uses a binary number "1" to indicate the open state information, and uses a binary number "0" to indicate the closed state information. The second network device may obtain n pieces of queue state information that correspond to the n slots and that are represented by binary numbers, and the second network device determines, as the slot bitmap, a binary sequence including the n pieces of queue state information represented by the binary numbers. For example, the critical packet queue is a Qbv queue, and the non-critical packet queue is a best effort (best effort, BE) queue.

In an example, the second gate control list is shown in the following Table 4.

**Table 4 (Second gate control list)**

| Packet queue | T1 | T2 | T3 | T4 | T5 | T6 |
|---|---|---|---|---|---|---|
| Q1 | C | O | C | C | C | C |
| Q2 | C | C | O | C | C | C |
| Q3 | C | C | C | O | C | C |
| Q4 | C | C | C | C | C | C |
| Q5 | C | C | C | C | C | C |
| Q6 | C | C | C | C | C | C |
| Q7 | C | C | C | C | C | C |
| Q8 | O | C | C | C | O | O |

As shown in Table 4, the second gate control list includes six slots T1 to T6 and eight pieces of queue state information corresponding to each slot. The eight pieces of queue state information are in one-to-one correspondence with eight packet queues Q1 to Q8. "O" and "C" in the second gate control list are both queue state information. The queue state information "O" indicates that a corresponding packet queue is in the open state, the queue state information "O" is also referred to as open state information, the queue state information "C" indicates that a corresponding packet queue is in the closed state, and the queue state information "C" is also referred to as closed state information. In an example, the packet queues Q1 to Q8 are all Qbv queues. A result obtained by the second network device by performing a NOR operation on the eight pieces of queue state information corresponding to the slot T1 is 0, and therefore, it is determined that a state of the slot T1 is the unavailable state. A result obtained by the second network device by performing a NOR operation on the eight pieces of queue state information corresponding to the slot T2 is 0, and therefore, it is determined that a state of the slot T2 is the unavailable state. The rest may be deduced by analogy. A result obtained by the second network device by performing a NOR operation on the eight pieces of queue state information corresponding to the slot T6 is 0, and therefore, it is determined that a state of the slot T6 is the unavailable state. A slot bitmap generated by the second network device based on the states of the six slots is 000000. In another example, the packet queues Q1 to Q7 are all Qbv queues, and the packet queue Q8 is a BE queue. The second network device determines, based on the queue state information of the packet queue Q8 corresponding to the slot T1, that a state of the slot T1 is the available state. The second network device determines, based on the queue state information of the packet queue Q8 corresponding to the slot T2, that a state of the slot T2 is the unavailable state. The rest may be deduced by analogy. The second network device determines, based on the queue state information of the packet queue Q8 corresponding to the slot T6, that a state of the slot T6 is the available state. A slot bitmap generated by the second network device based on the states of the six slots is 100011.

In an optional embodiment, the available slot information of the second network device includes an end-to-end delay corresponding to each available slot in the second gate control list of the second network device. When the second network device is the egress device on the forwarding path of the first service, the end-to-end delay corresponding to each available slot in the second gate control list is equal to a length of the available slot. When the second network device is the transit device on the forwarding path of the first service, for each available slot in the second gate control list, the second network device determines, based on the length of the available slot and available slot information synchronized from a next-hop device of the second network device to the second network device, an end-to-end delay corresponding to the available slot. For example, the available slot in the second gate control list includes the second slot, the next-hop device of the second network device is a third network device, the available slot information synchronized by the third network device to the second network device includes an end-to-end delay corresponding to a third slot in an available slot of the third network device, the third slot is an available slot in a third gate control list of the third network device, for example, an earliest available slot in the third gate control list, the third gate control list is a gate control list of a port that is in the third network device and that is configured to forward the first service, and the second network device determines, based on the length of the second slot and the end-to-end delay corresponding to the third slot, the end-to-end delay corresponding to the second slot. For example, the second network device determines a sum of the length of the second slot and the end-to-end delay corresponding to the third slot as the end-to-end delay corresponding to the second slot. The third slot is a third slot in the available slot of the third network device. For a process in which the second network device determines the end-to-end delay corresponding to each available slot in the second gate control list, refer to a process in which the second network device determines the end-to-end delay corresponding to the second slot. Details are not described in this embodiment of this application again.

In this embodiment of this application, an example in which the second network device synchronizes the available slot information of the second network device to the first network device is used for description. In another embodiment, the second network device synchronizes the gate control list of the second network device to the first network device, and the first network device generates the slot forwarding entry of the first network device based on the available slot of the first network device and the gate control list of the second network device. A data amount of the available slot information is less than that for synchronization of the gate control list. Therefore, overheads for synchronization of the available slot information are lower, so that synchronization overheads are reduced.

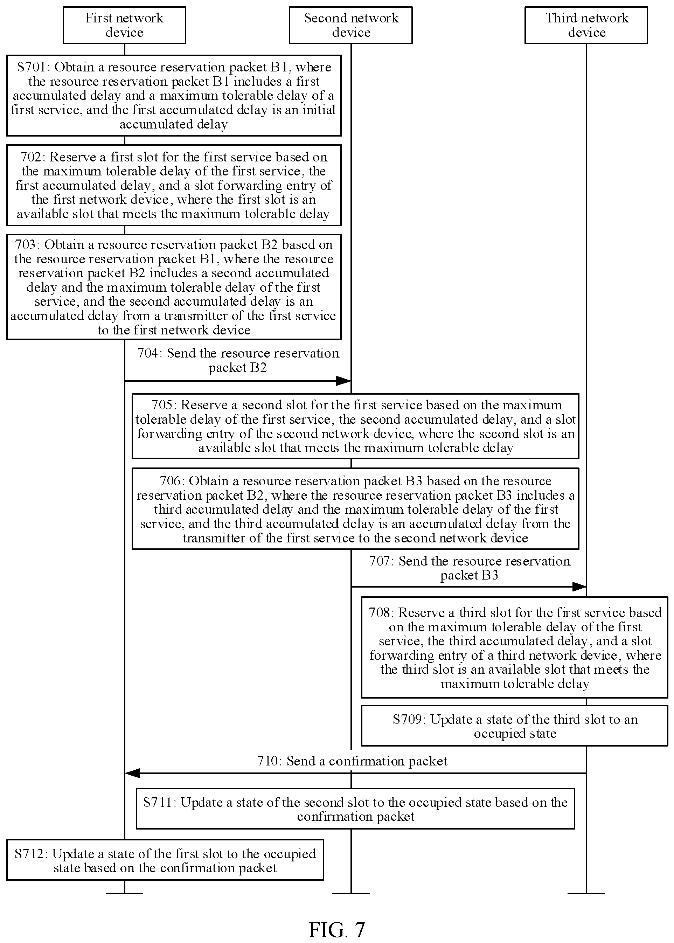

FIG. 7 is a flowchart of still another resource reservation method according to an embodiment of this application. The resource reservation method is applied to a resource reservation system including a first network device, a second network device, and a third network device. The first network device, the second network device, and the third network device are three network devices on a forwarding path of a first service, the second network device is a next-hop device of the first network device, and the third network device is a next-hop device of the second network device. The following uses an example in which the first network device is an ingress device on the forwarding path of the first service, the second network device is a transit device on the forwarding path, and the third network device is an egress device on the forwarding path for description. For example, as shown in FIG. 1 or FIG. 2, the forwarding path W1 is the forwarding path of the first service, the first network device is the network device 101, the second network device is the network device 102, and the third network device is the network device 103. Refer to FIG. 7. The resource reservation method includes the following steps S701 to S712.

S701: The first network device obtains a resource reservation packet B1, where the resource reservation packet B1 includes a first accumulated delay and a maximum tolerable delay of the first service, and the first accumulated delay is an initial accumulated delay.

Optionally, the resource reservation packet B1 further includes first expected slot information, the first expected slot information is initial expected slot information, and the first expected slot information indicates a slot that the first network device is expected to reserve for the first service.

In an embodiment, the first network device receives the resource reservation packet B1 from a transmitter of the first service. In another embodiment, the first network device obtains the first accumulated delay, the first expected slot information, and the maximum tolerable delay of the first service that are configured by a user, and the first network device generates the resource reservation packet B1 based on the first accumulated delay, the first expected slot information, and the maximum tolerable delay.

S702: The first network device reserves a first slot for the first service based on the maximum tolerable delay of the first service, the first accumulated delay, and a slot forwarding entry of the first network device, where the first slot is an available slot that meets the maximum tolerable delay.

Optionally, the first network device obtains the slot forwarding entry of the first network device, and the first network device reserves, based on the first accumulated delay and the maximum tolerable delay of the first service that are included in the resource reservation packet B1, and the slot forwarding entry of the first network device that is obtained by the first network device, the first slot for the first service in a gate control list of a port that is in the first network device and that is configured to forward the first service.

Optionally, the resource reservation packet B1 further includes the first expected slot information. The first network device reserves, based on the first accumulated delay, the first expected slot information, and the maximum tolerable delay of the first service that are included in the resource reservation packet B1, and the slot forwarding entry of the first network device, the first slot for the first service in the gate control list of the port that is in the first network device and that is configured to forward the first service.

After the first network device reserves the first slot for the first service, the first network device updates a state of the first slot to a reserved state.

For an implementation process in which the first network device obtains the slot forwarding entry of the first network device, refer to related descriptions in S302. For a process in which the first network device reserves the first slot for the first service, refer to related descriptions in S303. Details are not described herein again.

S703: The first network device obtains a resource reservation packet B2 based on the resource reservation packet B1, where the resource reservation packet B2 includes a second accumulated delay and the maximum tolerable delay of the first service, and the second accumulated delay is an accumulated delay from the transmitter of the first service to the first network device.

Optionally, the first network device determines a sum of the first accumulated delay and a length of the first slot reserved by the first network device for the first service as the second accumulated delay, and the first network device updates, by using the second accumulated delay, the first accumulated delay carried in the resource reservation packet B1, to obtain the resource reservation packet B2. In an embodiment, the resource reservation packet B1 further includes the first expected slot information. The first network device determines second expected slot information based on the first slot, and the first network device further updates, by using the second expected slot information, the first expected slot information carried in the resource reservation packet B1. The resource reservation packet B2 includes the second accumulated delay, the second expected slot information, and the maximum tolerable delay of the first service, and the second expected slot information indicates a slot that the first network device expects the second network device to reserve for the first service.

S704: The first network device sends the resource reservation packet B2 to the second network device.

S705: The second network device reserves a second slot for the first service based on the maximum tolerable delay of the first service, the second accumulated delay, and a slot forwarding entry of the second network device, where the second slot is an available slot that meets the maximum tolerable delay.

Optionally, the second network device obtains the slot forwarding entry of the second network device, and the second network device reserves, based on the second accumulated delay and the maximum tolerable delay of the first service that are included in the resource reservation packet B2, and the slot forwarding entry of the second network device that is obtained by the second network device, the second slot for the first service in a gate control list of a port that is in the second network device and that is configured to forward the first service.

Optionally, the resource reservation packet B2 further includes the second expected slot information. The second network device reserves, based on the second accumulated delay, the second expected slot information, and the maximum tolerable delay of the first service that are included in the resource reservation packet B2, and the slot forwarding entry of the second network device, the second slot for the first service in the gate control list of the port that is in the second network device and that is configured to forward the first service.

After the second network device reserves the second slot for the first service, the second network device updates a state of the second slot to the reserved state.

For an implementation process in which the second network device obtains the slot forwarding entry of the second network device, refer to related descriptions in S302. For a process in which the second network device reserves the second slot for the first service, refer to related descriptions in S303. Details are not described herein again.

S706: The second network device obtains a resource reservation packet B3 based on the resource reservation packet B2, where the resource reservation packet B3 includes a third accumulated delay and the maximum tolerable delay of the first service, and the third accumulated delay is an accumulated delay from the transmitter of the first service to the second network device.

Optionally, the second network device determines a sum of the second accumulated delay and a length of the second slot reserved by the second network device for the first service as the third accumulated delay, and the second network device updates, by using the third accumulated delay, the second accumulated delay carried in the resource reservation packet B2, to obtain the resource reservation packet B3. In an embodiment, the resource reservation packet B2 further includes the second expected slot information. The second network device determines third expected slot information based on the second slot, and the second network device further updates, by using the third expected slot information, the second expected slot information carried in the resource reservation packet B2. The resource reservation packet B3 includes the third accumulated delay, the third expected slot information, and the maximum tolerable delay of the first service, and the third expected slot information indicates a slot that the second network device expects the third network device to reserve for the first service.

S707: The second network device sends the resource reservation packet B3 to the third network device.

S708: The third network device reserves a third slot for the first service based on the maximum tolerable delay of the first service, the third accumulated delay, and a slot forwarding entry of the third network device, where the third slot is an available slot that meets the maximum tolerable delay.

Optionally, the third network device obtains the slot forwarding entry of the third network device, and the third network device reserves, based on the third accumulated delay and the maximum tolerable delay of the first service that are included in the resource reservation packet B3, and the slot forwarding entry of the third network device that is obtained by the third network device, the third slot for the first service in a gate control list of a port that is in the third network device and that is configured to forward the first service.

Optionally, the resource reservation packet B3 further includes third expected slot information. The third network device reserves, based on the third accumulated delay, the third expected slot information, and the maximum tolerable delay of the first service that are included in the resource reservation packet B3, and the slot forwarding entry of the third network device, the third slot for the first service in the gate control list of the port that is in the third network device and that is configured to forward the first service.

For an implementation process in which the third network device obtains the slot forwarding entry of the third network device, refer to related descriptions in S302. For a process in which the third network device reserves the third slot for the first service, refer to related descriptions in S303. Details are not described herein again.

S709: The third network device updates a state of the third slot reserved for the first service to an occupied state.

S710: The third network device sends an acknowledgment packet to the first network device via the second network device.

In an embodiment, the acknowledgment packet includes an identifier of the first service, to indicate that the slot reserved for the first service is acknowledged.

In another embodiment, the acknowledgment packet includes related information of the resource reservation packets B1 to B3 used for slot reservation on the first service, to indicate that the slot reserved for the first service is acknowledged. For example, sequence numbers of the resource reservation packets B1 to B3 are the same, and the acknowledgment packet includes the sequence number.

S711: The second network device updates, based on the acknowledgment packet, the state of the second slot reserved for the first service to the occupied state.

S712: The first network device updates, based on the acknowledgment packet, the state of the first slot reserved for the first service to the occupied state.

In this embodiment of this application, an egress device of a forwarding path generates a slot forwarding entry of the egress device based on an available slot of the egress device, and each network device in an ingress device and a transit device on the forwarding path generates a slot forwarding entry of the network device based on an available slot of the network device and available slot information synchronized by a next-hop device of the network device to the network device. The following uses an example in which the first network device is the ingress device or the transit device to describe the process in which the first network device obtains the slot forwarding entry of the first network device.

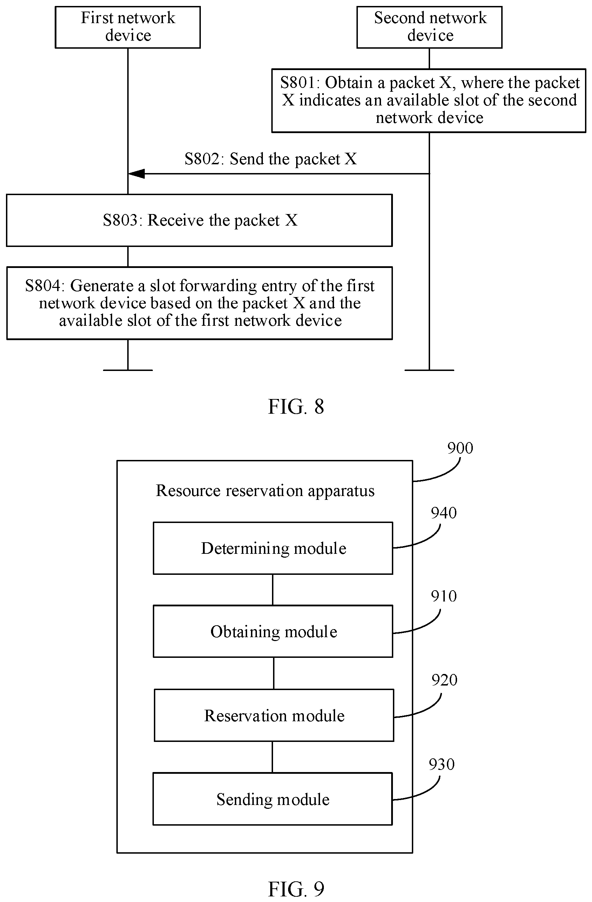

FIG. 8 is a flowchart of a method for obtaining a slot forwarding entry according to an embodiment of this application. The obtaining method is applied to a system including a first network device and a second network device. The first network device and the second network device are two network devices on a forwarding path of a first service, and the second network device is a next-hop device of the first network device. For example, as shown in FIG. 1 or FIG. 2, the forwarding path W1 is the forwarding path of the first service, the first network device is the network device 101, and the second network device is the network device 102; or the first network device is the network device 102, and the second network device is the network device 103. As shown in FIG. 8, the obtaining method includes the following steps S801 to S804.

S801: The second network device obtains a packet X, where the packet X indicates an available slot of the second network device.

Optionally, the second network device generates the packet X, where the packet X includes available slot information of the second network device, and the available slot information indicates the available slot of the second network device. Therefore, the packet X indicates the available slot of the second network device.

In an embodiment, the available slot information indicates that the available slot of the second network device includes a second slot, and the available slot information includes an end-to-end delay corresponding to the second slot. Therefore, the packet X indicates that the available slot of the second network device includes the second slot, and the packet X includes the end-to-end delay corresponding to the second slot. In another embodiment, the available slot information includes a slot bitmap, and the slot bitmap includes a plurality of bits in one-to-one correspondence with a plurality of slots in a gate control list of the second network device. For example, the slot bitmap includes a plurality of bits in one-to-one correspondence with a plurality of slots in a second gate control list of the second network device. Each of the plurality of bits indicates a state of a corresponding slot, a state of any slot includes an available state or an unavailable state, and unavailable states include a reserved state and an occupied state. Because the packet X includes the available slot information, and the available slot information includes the slot bitmap, the packet X includes the slot bitmap.

In an optional embodiment, the packet X is the second packet in the foregoing embodiment. For an implementation process in which the second network device obtains the packet X, refer to an implementation process in which the second network device obtains the second packet in the foregoing embodiment. Details are not described herein again in this embodiment of this application.

S802: The second network device sends the packet X to the first network device.

S803: The first network device receives the packet X.

S804: The first network device generates a slot forwarding entry of the first network device based on the packet X and an available slot of the first network device.

In an optional embodiment, the first network device generates the slot forwarding entry of the first network device based on the available slot information of the second network device that is included in the packet X and the available slot of the first network device. For an implementation process in which the first network device generates the slot forwarding entry of the first network device based on the available slot information of the second network device and the available slot of the first network device, refer to S302. Details are not described herein again.

The foregoing describes the method embodiments of this application, and the following describes apparatus embodiments of this application. An apparatus in this application may be configured to perform the method in this application. For details that are not disclosed in the apparatus embodiments of this application, refer to the method embodiments.

FIG. 9 is a diagram of a resource reservation apparatus 900 according to an embodiment of this application. The resource reservation apparatus 900 is used in the first network device in the foregoing embodiment. For example, the resource reservation apparatus 900 is the first network device or a functional component in the first network device. The resource reservation apparatus 900 may implement the resource reservation method provided in the embodiment shown in FIG. 3 or FIG. 4, or implement related steps performed by the first network device in the embodiment shown in FIG. 7. As shown in FIG. 9, the resource reservation apparatus 900 includes an obtaining module 910 and a reservation module 920.

The obtaining module 910 is configured to obtain a first accumulated delay and a maximum tolerable delay of a first service, where the first accumulated delay is an initial accumulated delay, or the first accumulated delay is an accumulated delay from a transmitter of the first service to a previous-hop device of the first network device; and configured to obtain a slot forwarding entry of the first network device. For a function implementation of the obtaining module 910, refer to related descriptions in S301 and S302.

The reservation module 920 is configured to reserve a first slot for the first service based on the maximum tolerable delay, the first accumulated delay, and the slot forwarding entry of the first network device, where the first slot is an available slot that meets the maximum tolerable delay. For a function implementation of the reservation module 920, refer to related descriptions in S303 and S302.

Optionally, the slot forwarding entry of the first network device includes an end-to-end delay corresponding to the first slot, and the end-to-end delay corresponding to the first slot is a delay from the first network device to a receiver of the first service. The reservation module 920 is configured to reserve the first slot for the first service based on the maximum tolerable delay of the first service, the first accumulated delay, and the end-to-end delay corresponding to the first slot.

Optionally, the slot forwarding entry of the first network device further includes next-hop slot information, and the next-hop slot information indicates a second slot in an available slot of a next-hop device of the first network device. The reservation module 920 is configured to reserve the first slot for the first service based on the maximum tolerable delay of the first service, the first accumulated delay, the end-to-end delay corresponding to the first slot, and the next-hop slot information.

Optionally, the obtaining module 910 is further configured to obtain first expected slot information, where the first expected slot information indicates a slot that the first network device is expected to reserve for the first service. Correspondingly, the reservation module 920 is configured to reserve the first slot for the first service based on the maximum tolerable delay of the first service, the first accumulated delay, the first expected slot information, and the slot forwarding entry of the first network device.

Optionally, still with reference to FIG. 9, the resource reservation apparatus 900 further includes: a sending module 930, configured to send a first packet to a second network device, where the first packet includes the maximum tolerable delay of the first service and a second accumulated delay, the second accumulated delay is an accumulated delay from the transmitter of the first service to the first network device, the second network device is the next-hop device of the first network device, and the first packet is used by the second network device to reserve a slot for the first service based on the maximum tolerable delay, the second accumulated delay, and a slot forwarding entry of the second network device.

Optionally, the first packet further includes second expected slot information, the second expected slot information indicates a slot that the first network device expects the second network device to reserve for the first service, and the first packet is used by the second network device to reserve a slot for the first service based on the maximum tolerable delay of the first service, the second accumulated delay, the second expected slot information, and the slot forwarding entry of the second network device.

Optionally, the obtaining module 910 is configured to: receive the second packet sent by the second network device, where the second packet indicates an available slot of the second network device, and the second network device is the next-hop device of the first network device; and generate the slot forwarding entry of the first network device based on the second packet and the first slot.

Optionally, the second packet indicates that available slot of the second network device includes the second slot, the second packet includes an end-to-end delay corresponding to the second slot, and the end-to-end delay corresponding to the second slot is a delay from the second network device to the receiver of the first service. The obtaining module 910 is configured to: determine, based on the end-to-end delay corresponding to the second slot, the end-to-end delay corresponding to the first slot; and generate the slot forwarding entry of the first network device based on the end-to-end delay corresponding to the first slot.

Optionally, still with reference to FIG. 9, the resource reservation apparatus 900 further includes: a determining module 940, configured to determine next-hop slot information based on the second slot, where the next-hop slot information indicates the second slot. Correspondingly, the obtaining module 910 is configured to generate the slot forwarding entry of the first network device based on the end-to-end delay corresponding to the first slot and the next-hop slot information.

Optionally, the second packet includes a slot bitmap, the slot bitmap includes a plurality of bits in one-to-one correspondence with a plurality of slots in a gate control list that is of the second network device and that is used to forward the first service, each bit indicates a state of a corresponding slot, and the state includes an available state or an unavailable state.

Optionally, the first packet is a RAP packet, and the second packet is an ISIS packet or an LRP packet.

Optionally, the slot forwarding entry is a routing and forwarding entry or a flow forwarding entry.

In conclusion, according to the technical solution provided in this embodiment of this application, a network device on a forwarding path of the first service reserves a slot for the first service based on an accumulated delay, the maximum tolerable delay of the first service, and a slot forwarding entry of the network device. In this case, after the first service arrives, the network device on the forwarding path of the first service forwards the first service through the slot reserved for the first service. In this way, transmission quality of the first service is ensured. In particular, when the first service is a deterministic service, deterministic transmission quality of the first service is ensured. For example, a deterministic delay of the first service is ensured. The resource reservation solution provided in this embodiment of this application is a distributed resource reservation solution. A slot can be reserved for a service without a need for a controller to perform slot orchestration on a network device. Therefore, flexibility is high, and the solution is applicable to a network scenario without a controller.

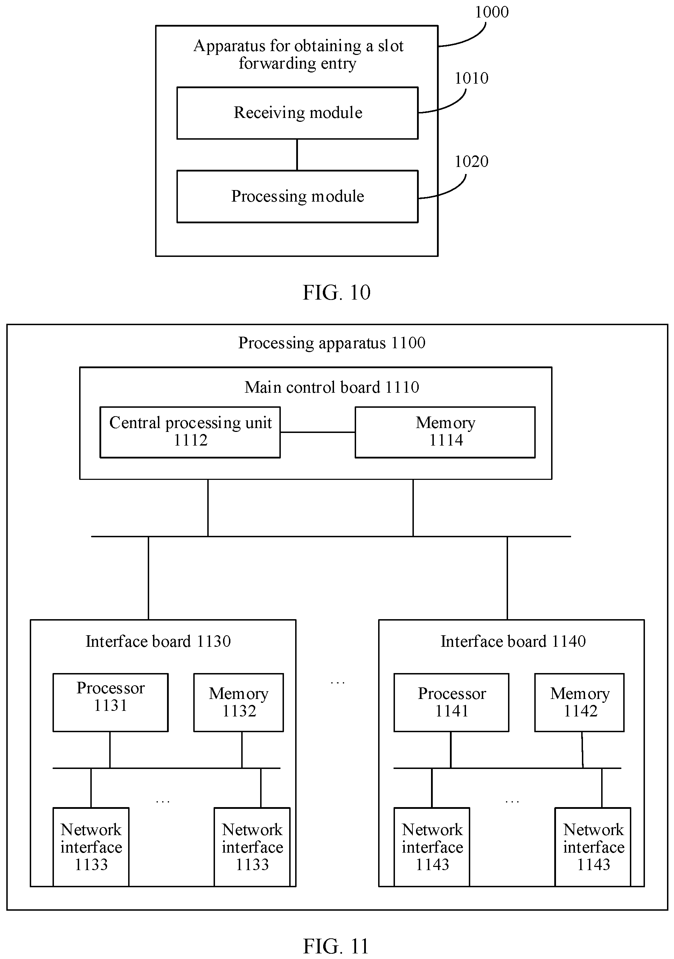

FIG. 10 is a diagram of an apparatus 1000 for obtaining a slot forwarding entry according to an embodiment of this application. The apparatus 1000 for obtaining a slot forwarding entry is used in a first network device. For example, the apparatus 1000 for obtaining a slot forwarding entry is the first network device or a functional component in the first network device. The apparatus 1000 for obtaining a slot forwarding entry may implement the method for obtaining a slot forwarding entry provided in the embodiment shown in FIG. 8. As shown in FIG. 10, the apparatus 1000 for obtaining a slot forwarding entry includes a receiving module 1010 and a processing module 1020.

The receiving module 1010 is configured to receive a packet sent by a second network device, where the packet indicates an available slot of the second network device.

The processing module 1020 is configured to generate a slot forwarding entry based on the packet and an available slot of the first network device.

Optionally, the packet indicates that an available slot of the second network device includes a second slot, the packet includes an end-to-end delay corresponding to the second slot, the end-to-end delay corresponding to the second slot is a delay from the second network device to a receiver, and the available slot of the first network device includes a first slot. The processing module 1020 is configured to determine, based on the end-to-end delay corresponding to the second slot, an end-to-end delay corresponding to the first slot, where the end-to-end delay corresponding to the first slot is a delay from the first network device to the receiver; and generate the slot forwarding entry based on the end-to-end delay corresponding to the first slot.

Optionally, the processing module 1020 is configured to: determine next-hop slot information based on the second slot, where the next-hop slot information indicates the second slot; and generate the slot forwarding entry based on the end-to-end delay corresponding to the first slot and the next-hop slot information.

Optionally, the packet includes a slot bitmap, the slot bitmap includes a plurality of bits in one-to-one correspondence with a plurality of slots in the gate control list of the second network device, each bit indicates a state of a corresponding slot, and the state includes an available state or an unavailable state.

Optionally, the packet is an ISIS packet or an LRP packet.

Optionally, the slot forwarding entry is a routing and forwarding entry or a flow forwarding entry.

In conclusion, according to the technical solution provided in this embodiment of this application, the first network device generates the slot forwarding entry based on the packet that is sent by the second network device and that indicates the available slot of the second network device, and the available slot of the first network device, so that the first network device reserves a slot for a service based on the slot forwarding entry, and forwards the service through the slot reserved for the service, to ensure transmission quality of the service.

It should be understood that the resource reservation apparatus provided in embodiments of this application may alternatively be implemented by using an application-specific integrated circuit (application-specific integrated circuit, ASIC) or a programmable logic device (programmable logic device, PLD). The apparatus for obtaining a slot forwarding entry provided in embodiments of this application may alternatively be implemented by using an ASIC or a PLD. The PLD may be a complex program logic device (complex programmable logical device, CPLD), a field programmable gate array (field programmable gate array, FPGA), general-purpose array logic (generic array logic, GAL), or any combination thereof. The resource reservation method provided in the foregoing method embodiments may alternatively be implemented by using software. When the resource reservation method provided in the foregoing method embodiments is implemented by using software, each module in the resource reservation apparatus may be a software module. In addition, the method for obtaining a slot forwarding entry provided in the foregoing method embodiments may alternatively be implemented by using software. When the method for obtaining a slot forwarding entry provided in the foregoing method embodiments is implemented by using software, each module in the apparatus for obtaining a slot forwarding entry may be a software module.

An embodiment of this application provides a resource reservation apparatus. The resource reservation apparatus includes a memory and a processor. The memory is configured to store a computer program. The processor is configured to execute the computer program stored in the memory, to cause the resource reservation apparatus to perform the resource reservation method provided in the embodiment shown in FIG. 3, FIG. 4, or FIG. 7. In addition, an embodiment of this application provides an apparatus for obtaining a slot forwarding entry. The apparatus for obtaining a slot forwarding entry includes a memory and a processor. The memory is configured to store a computer program. The processor is configured to execute the computer program stored in the memory, to cause the resource reservation apparatus to perform the method for obtaining a slot forwarding entry provided in the embodiment shown in FIG. 8.

For ease of description, the resource reservation apparatus and the apparatus for obtaining a slot forwarding entry are collectively referred to as processing apparatuses below.

In an example, FIG. 11 is a diagram of a processing apparatus 1100 according to an embodiment of this application. The processing apparatus 1100 is a resource reservation apparatus or an apparatus for obtaining a slot forwarding entry. The processing apparatus 1100 is used in a first network device. For example, the processing apparatus 1100 is the first network device or some components in the first network device. The processing apparatus 1100 is configured to perform the foregoing embodiment of the resource reservation method or the foregoing embodiment of the method for obtaining a slot forwarding entry. As shown in FIG. 11, the processing apparatus 1100 includes a main control board 1110, an interface board 1130, and an interface board 1140. When there are a plurality of interface boards, a switching board (not shown in FIG. 11) may be included. The switching board is configured to complete data exchange between interface boards (where the interface board is also referred to as a line card or a service board).

The main control board 1110 is configured to complete functions such as system management, device maintenance, and protocol processing. The interface board 1130 and the interface board 1140 are configured to provide various service interfaces (for example, a POS interface, a GE interface, and an ATM interface) and forward packets. The main control board 1110 mainly includes three types of functional units: a system management and control unit, a system clock unit, and a system maintenance unit. The main control board 1110, the interface board 1130, and the interface board 1140 are connected to a system backboard through a system bus to implement interworking. The interface board 1130 includes one or more processors 1131. The processor 1131 is configured to control and manage the interface board 1130 and communicate with a central processing unit 1112 on the main control board 1110. A memory 1132 on the interface board 1130 is configured to store a slot forwarding entry, a gate control list, and the like in the foregoing embodiments. The main control board 1110 may include a memory 1114, and the memory 1114 on the main control board 1110 may also be configured to store a slot forwarding entry, a gate control list, and the like.

The interface board 1130 includes one or more network interfaces 1133 configured to receive and send a packet. The processor 1131 performs processing based on the packet received through the network interface 1133. A specific implementation process is not described herein again. A specific function of the processor 1131 is not described herein again.

It may be understood that, as shown in FIG. 11, in this embodiment, a plurality of interface boards are included, and a distributed forwarding mechanism is used. In this mechanism, an operation on the interface board 1140 is basically similar to an operation on the interface board 1130 (where a function of the memory 1142 is similar to a function of the memory 1132, and a function of the network interface 1143 is similar to a function of the network interface 1133). For brevity, details are not described again. In addition, the processor 1131 on the interface board 1130 and/or a processor 1141 on the interface board 1140 in FIG. 11 may be dedicated hardware or chips/a chip, for example, network processors/a network processor or application-specific integrated circuits/an application-specific integrated circuit, to implement the foregoing functions. This implementation is generally referred to as a manner of using dedicated hardware or a chip for processing on a forwarding plane. In another implementation, the processor 1131 on the interface board 1130 and/or the processor 941 on the interface board 1140 may alternatively be general-purpose processors/a general-purpose processor, for example, general-purpose central processing units (central processing units, CPUs)/a general-purpose central processing unit, to implement the functions described above.

It should be noted that there may be one or more main control boards, and when there are a plurality of main control boards, an active main control board and a standby main control board may be included. There may be one or more interface boards. A stronger data processing capability of the processing apparatus indicates a larger quantity of provided interface boards. In a case of a plurality of interface boards, the plurality of interface boards may communicate with each other through one or more switching boards, and load sharing and redundancy backup may be implemented by the plurality of interface boards together. In a centralized forwarding architecture, the processing apparatus may not need a switching board, and the interface board bears a function of processing service data of an entire system. In a distributed forwarding architecture, the processing apparatus includes a plurality of interface boards. Data exchange between the plurality of interface boards may be implemented through a switching board, to provide a large-capacity data exchange and processing capability. Therefore, a data access and processing capability of the processing apparatus in the distributed architecture is stronger than that of a device in the centralized architecture. A specific architecture to be used depends on a specific networking deployment scenario, and is not limited herein.

In an optional embodiment, the memory 1132 is a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only Memory, CD-ROM) or another compact disc storage, an optical disc storage (including a compact optical disc, a laser disc, an optical disc, a digital versatile disc, a Blu-ray disc, and the like), a magnetic disk or another magnetic storage device, or any other medium that can be used to carry or store expected program code in a form of an instruction or a data structure and that can be accessed by a computer. However, the memory is not limited thereto. The memory 1132 may exist independently, and is connected to the processor 1131 through a communication bus. The memory 1132 may alternatively be integrated with the processor 1131.

The memory 1132 is configured to store program code, and the processor 1131 controls execution of the program code, to perform some or all steps of the resource reservation method provided in the foregoing embodiments, or perform some or all steps of the method for obtaining a slot forwarding entry provided in the foregoing embodiments. The processor 1131 is configured to execute the program code stored in the memory 1132. The program code may include one or more software modules. The one or more software modules may be the functional modules provided in the embodiment shown in FIG. 9 or FIG. 10. The memory 1114 may also be configured to store program code, and the central processing unit 1112 controls execution of the program code, to perform some or all steps of the resource reservation method provided in the foregoing embodiments, or perform some or all steps of the method for obtaining a slot forwarding entry provided in the foregoing embodiments.

In some embodiments, the network interface 1133 may be any apparatus such as a transceiver, and is configured to communicate with another device or a communication network, for example, an Ethernet, a radio access network (radio access network, RAN), and a wireless local area network (wireless local area network, WLAN).

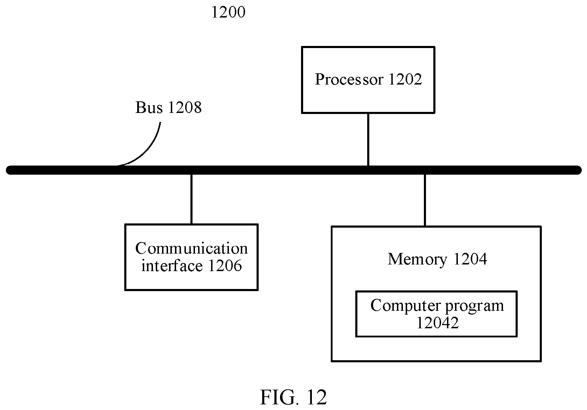

In another example, FIG. 12 is a diagram of a processing apparatus 1200 according to an embodiment of this application. The processing apparatus 1200 is a resource reservation apparatus or an apparatus for obtaining a slot forwarding entry. The processing apparatus 1200 is applied to a first network device. For example, the processing apparatus 1200 is the first network device or some components of the first network device. The processing apparatus 1200 is configured to perform the foregoing embodiment of the resource reservation method or the foregoing embodiment of the method for obtaining a slot forwarding entry. As shown in FIG. 12, the processing apparatus 1200 includes a processor 1202, a memory 1204, a communication interface 1206, and a bus 1208. The processor 1202, the memory 1204, and the communication interface 1206 are communicatively connected to each other through the bus 1208. A connection manner between the processor 1202, the memory 1204, and the communication interface 1206 shown in FIG. 12 is merely an example. The processor 1202, the memory 1204, and the communication interface 1206 may alternatively be communicatively connected to each other in a connection manner other than the bus 1208.

The memory 1204 may be configured to store a computer program 12042. The computer program 12042 may include instructions and data. The memory 1204 may be various types of storage media, for example, a RAM, a ROM, a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, and a register.

The processor 1202 may be a general-purpose processor. The general-purpose processor is a processor that reads and executes a computer program (for example, the computer program 12042) stored in a memory (for example, the memory 1204) to perform a specific step and/or operation. In a process of performing the foregoing step and/or operation, the general-purpose processor may use data stored in the memory (for example, the memory 1204). The stored computer program may be executed to implement related functions of the obtaining module 910, the reservation module 920, the determining module 940, the processing module 1020, and the like. The general-purpose processor is, for example, a CPU, but is not limited thereto. The processor 1202 may alternatively be a dedicated processor. The dedicated processor is a processor specially designed to perform a specific step and/or operation. The dedicated processor is a digital signal processor (digital signal processor, DSP), an ASIC, an FPGA, or the like, but is not limited thereto. In addition, the processor 1202 may alternatively be a combination of a plurality of processors, for example, a multi-core processor. The processor 1202 may include at least one circuit, to perform all or some steps of the resource reservation method provided in the foregoing embodiments, or implement all or some steps of the method for obtaining a slot forwarding entry provided in the foregoing embodiments.

The communication interface 1206 includes an interface configured to implement an interconnection between components in the processing apparatus 1200, for example, an input/output (input/output, I/O) interface, a physical interface, or a logical interface, and an interface configured to implement an interconnection between the processing apparatus 1200 and another device (for example, a network device). The physical interface may be a gigabit Ethernet (gigabit Ethernet, GE) interface, and is configured to implement an interconnection between the processing apparatus 1200 and another device. The logical interface is an internal interface of the processing apparatus 1200, and is configured to implement a component interconnection inside the processing apparatus 1200. It is easy to understand that the communication interface 1206 is used for communication between the processing apparatus 1200 and another device. For example, the communication interface 1206 is configured to send and receive a packet between the processing apparatus 1200 and the another device. The communication interface 1206 may implement related functions of the sending module 930, the receiving module 1110, and the like. In addition, the communication interface 1206 may further include a transceiver to receive and send a packet. The transceiver may also implement related functions of the sending module 930, the receiving module 1110, and the like.

The bus 1208 may be any type of communication bus, for example, a system bus, configured to implement an interconnection between the processor 1202, the memory 1204, and the communication interface 1206.

The foregoing components may be separately disposed on chips that are independent of each other, or at least some or all of the components may be disposed on a same chip. Whether the components are separately disposed on different chips or integrated and disposed on one or more chips usually depends on a requirement of a product design. Specific implementations of the foregoing components are not limited in embodiments of this application.

The processing apparatus 1200 shown in FIG. 12 is merely an example, and the processing apparatus 1200 may further include another component. Examples are not listed in this specification. The processing apparatus 1200 reserves a slot for a service by performing all or some steps of the resource reservation method provided in the foregoing embodiments, or obtains a slot forwarding entry by performing all or some steps of the method for obtaining a slot forwarding entry provided in the foregoing embodiments.

An embodiment of this application provides a resource reservation system, including a first network device and a second network device. The second network device is a next-hop device of the first network device, and the first network device includes the resource reservation apparatus 900 shown in FIG. 9, or the first network device includes the processing apparatus shown in FIG. 11 or FIG. 12. For example, the resource reservation system is the communication system shown in FIG. 1 or FIG. 2, the first network device is the network device 101, and the second network device is the network device 102; or the first network device is the network device 102, and the second network device is the network device 103.

An embodiment of this application provides a system for obtaining a slot forwarding entry, including a first network device and a second network device. The second network device is a next-hop device of the first network device, and the first network device includes the obtaining apparatus 1000 shown in FIG. 10 or the processing apparatus shown in FIG. 11 or FIG. 12. For example, the obtaining system is the communication system shown in FIG. 1 or FIG. 2, the first network device is the network device 101, and the second network device is the network device 102; or the first network device is the network device 102, and the second network device is the network device 103.

An embodiment of this application provides a computer-readable storage medium. The computer-readable storage medium stores a computer program. When the computer program is executed (for example, executed by a network device or a processor), all or some steps of the resource reservation method provided in the foregoing method embodiments are implemented, or all or some steps of the method for obtaining a slot forwarding entry provided in the foregoing method embodiments are implemented.

An embodiment of this application provides a computer program product. The computer program product includes a program or code. When the program or the code is executed (for example, executed by a network device or a processor), all or some steps of the resource reservation method provided in the foregoing method embodiments are implemented, or all or some steps of the method for obtaining a slot forwarding entry provided in the foregoing method embodiments are implemented.

An embodiment of this application provides a chip. The chip includes a programmable logic circuit and/or program instructions. When the chip is run, the chip is configured to implement all or some steps of the resource reservation method provided in the foregoing method embodiments, or implement all or some steps of the method for obtaining a slot forwarding entry provided in the foregoing method embodiments.

All or some of the foregoing embodiments may be implemented by using software, hardware, firmware, or any combination thereof. When embodiments are implemented by using the software, all or some of the embodiments may be implemented in a form of a computer program product. The computer program product includes one or more computer instructions. When the computer program instructions are loaded and executed on a computer, the procedures or the functions according to embodiments of this application are all or partially generated. The computer may be a general-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or includes a data storage apparatus, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

In embodiments of this application, the term "at least one" means one or more, and "a plurality of" means two or more. In embodiments of this application, unless otherwise specified, the symbol "/" generally means "or". For example, A/B represents A or B. The term "and/or" in this application describes only an association relationship for describing associated objects and represents that three relationships may exist. For example, A and/or B may represent the following three cases: Only A exists, both A and B exist, and only B exists. In addition, for ease of clear description, in this application, words such as "first", "second", and "third" are used to distinguish between same items or similar items whose functions and purposes are basically the same. A person skilled in the art may understand that the words such as "first", "second", and "third" do not limit a quantity and an execution sequence.

Different types of embodiments such as the method embodiments and the apparatus embodiments provided in embodiments of this application may be cross-referenced. This is not limited in embodiments of this application. A sequence of operations in the method embodiments provided in embodiments of this application can be appropriately adjusted, and the operations can be correspondingly added or deleted based on a situation. Any variation method that can be readily figured out by a person skilled in the art within the technical scope disclosed in this application shall fall within the protection scope of this application. Therefore, details are not described again.

In corresponding embodiments provided in this application, it should be understood that the disclosed apparatus and the like may be implemented in other composition manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or the units may be implemented in electronic or other forms.

The units described as separate parts may or may not be physically separate, and parts described as units may or may not be physical units, may be located at one position, or may be distributed on a plurality of network nodes. Some or all of the units may be selected according to actual requirements to achieve the objectives of the solutions of embodiments.

The foregoing descriptions are merely example implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A resource reservation method, wherein the method comprises:
obtaining, by a first network device, a first accumulated delay and a maximum tolerable delay of a first service, wherein the first accumulated delay is an initial accumulated delay, or the first accumulated delay is an accumulated delay from a transmitter of the first service to a previous-hop device of the first network device;
obtaining, by the first network device, a slot forwarding entry of the first network device; and
reserving, by the first network device, a first slot for the first service based on the maximum tolerable delay, the first accumulated delay, and the slot forwarding entry of the first network device, wherein the first slot is an available slot that meets the maximum tolerable delay.

2. The method according to claim 1, wherein the slot forwarding entry of the first network device comprises an end-to-end delay corresponding to the first slot, and the end-to-end delay is a delay from the first network device to a receiver of the first service; and
reserving, by the first network device, the first slot for the first service based on the maximum tolerable delay, the first accumulated delay, and the slot forwarding entry of the first network device comprises: reserving, by the first network device, the first slot for the first service based on the maximum tolerable delay, the first accumulated delay, and the end-to-end delay corresponding to the first slot.

3. The method according to claim 2, wherein the slot forwarding entry of the first network device further comprises next-hop slot information, and the next-hop slot information indicates a second slot in an available slot of a next-hop device of the first network device; and
reserving, by the first network device, the first slot for the first service based on the maximum tolerable delay, the first accumulated delay, and the end-to-end delay corresponding to the first slot comprises: reserving, by the first network device, the first slot for the first service based on the maximum tolerable delay, the first accumulated delay, the end-to-end delay corresponding to the first slot, and the next-hop slot information.

4. The method according to any one of claims 1 to 3, wherein the method further comprises: obtaining, by the first network device, first expected slot information, wherein the first expected slot information indicates a slot that the first network device is expected to reserve for the first service; and
reserving, by the first network device, the first slot for the first service based on the maximum tolerable delay, the first accumulated delay, and the slot forwarding entry of the first network device comprises: reserving, by the first network device, the first slot for the first service based on the maximum tolerable delay, the first accumulated delay, the first expected slot information, and the slot forwarding entry of the first network device.

5. The method according to any one of claims 1 to 4, wherein the method further comprises:
sending, by the first network device, a first packet to a second network device, wherein the first packet comprises the maximum tolerable delay of the first service and a second accumulated delay, the second accumulated delay is an accumulated delay from the transmitter to the first network device, the second network device is the next-hop device of the first network device, and the first packet is used by the second network device to reserve a slot for the first service based on the maximum tolerable delay, the second accumulated delay, and a slot forwarding entry of the second network device.

6. The method according to claim 5, wherein the first packet further comprises second expected slot information, the second expected slot information indicates a slot that the first network device expects the second network device to reserve for the first service, and the first packet is used by the second network device to reserve a slot for the first service based on the maximum tolerable delay, the second accumulated delay, the second expected slot information, and the slot forwarding entry of the second network device.

7. The method according to any one of claims 1 to 6, wherein obtaining, by the first network device, the slot forwarding entry of the first network device comprises:
receiving, by the first network device, a second packet sent by the second network device, wherein the second packet indicates an available slot of the second network device, and the second network device is the next-hop device of the first network device; and
generating, by the first network device, the slot forwarding entry of the first network device based on the second packet and the first slot.

8. The method according to claim 7, wherein the second packet indicates that the available slot of the second network device comprises the second slot, the second packet comprises an end-to-end delay corresponding to the second slot, the end-to-end delay corresponding to the second slot is a delay from the second network device to the receiver of the first service, and generating, by the first network device, the slot forwarding entry of the first network device based on the second packet and the first slot comprises:
determining, by the first network device based on the end-to-end delay corresponding to the second slot, the end-to-end delay corresponding to the first slot; and
generating, by the first network device, the slot forwarding entry of the first network device based on the end-to-end delay corresponding to the first slot.

9. The method according to claim 8, wherein the method further comprises: determining, by the first network device, the next-hop slot information based on the second slot, wherein the next-hop slot information indicates the second slot; and
generating, by the first network device, the slot forwarding entry of the first network device based on the end-to-end delay corresponding to the first slot comprises: generating, by the first network device, the slot forwarding entry of the first network device based on the end-to-end delay corresponding to the first slot and the next-hop slot information.

10. The method according to any one of claims 7 to 9, wherein the second packet comprises a slot bitmap, the slot bitmap comprises a plurality of bits in one-to-one correspondence with a plurality of slots in a gate control list that is of the second network device and that is used to forward the first service, each bit indicates a state of a corresponding slot, and the state comprises an available state or an unavailable state.

11. A method for obtaining a slot forwarding entry, wherein the method comprises:
receiving, by a first network device, a packet sent by a second network device, wherein the packet indicates an available slot of the second network device; and
generating, by the first network device, a slot forwarding entry based on the packet and an available slot of the first network device.

12. The method according to claim 11, wherein the available slot of the first network device comprises a first slot, the packet indicates that the available slot of the second network device comprises a second slot, the packet comprises an end-to-end delay corresponding to the second slot, and the end-to-end delay corresponding to the second slot is a delay from the second network device to a receiver; and
generating, by the first network device, the slot forwarding entry based on the packet and the available slot of the first network device comprises:
determining, by the first network device based on the end-to-end delay corresponding to the second slot, an end-to-end delay corresponding to the first slot, wherein the end-to-end delay corresponding to the first slot is a delay from the first network device to the receiver; and
generating, by the first network device, the slot forwarding entry based on the end-to-end delay corresponding to the first slot.

13. The method according to claim 12, wherein the method further comprises: determining, by the first network device, next-hop slot information based on the second slot, wherein the next-hop slot information indicates the second slot; and
generating, by the first network device, the slot forwarding entry based on the end-to-end delay corresponding to the first slot comprises: generating, by the first network device, the slot forwarding entry based on the end-to-end delay corresponding to the first slot and the next-hop slot information.

14. The method according to any one of claims 11 to 13, wherein the packet comprises a slot bitmap, the slot bitmap comprises a plurality of bits in one-to-one correspondence with a plurality of slots in a gate control list of the second network device, each bit indicates a state of a corresponding slot, and the state comprises an available state or an unavailable state.

15. A resource reservation apparatus, applied to a first network device, wherein the apparatus comprises:
an obtaining module, configured to obtain a first accumulated delay and a maximum tolerable delay of a first service, wherein the first accumulated delay is an initial accumulated delay, or the first accumulated delay is an accumulated delay from a transmitter of the first service to a previous-hop device of the first network device; and configured to obtain a slot forwarding entry of the first network device; and
a reservation module, configured to reserve a first slot for the first service based on the maximum tolerable delay, the first accumulated delay, and the slot forwarding entry of the first network device, wherein the first slot is an available slot that meets the maximum tolerable delay.

16. The apparatus according to claim 15, wherein the slot forwarding entry of the first network device comprises an end-to-end delay corresponding to the first slot, and the end-to-end delay is a delay from the first network device to a receiver of the first service; and
the reservation module is configured to reserve the first slot for the first service based on the maximum tolerable delay, the first accumulated delay, and the end-to-end delay corresponding to the first slot.

17. The apparatus according to claim 16, wherein the slot forwarding entry of the first network device further comprises next-hop slot information, and the next-hop slot information indicates a second slot in an available slot of a next-hop device of the first network device; and
the reservation module is configured to reserve the first slot for the first service based on the maximum tolerable delay, the first accumulated delay, the end-to-end delay corresponding to the first slot, and the next-hop slot information.

18. The apparatus according to any one of claims 15 to 17, wherein
the obtaining module is further configured to obtain first expected slot information, wherein the first expected slot information indicates a slot that the first network device is expected to reserve for the first service; and
the reservation module is configured to reserve the first slot for the first service based on the maximum tolerable delay, the first accumulated delay, the first expected slot information, and the slot forwarding entry of the first network device.

19. The apparatus according to any one of claims 15 to 18, wherein the apparatus further comprises:
a sending module, configured to send a first packet to a second network device, wherein the first packet comprises the maximum tolerable delay of the first service and a second accumulated delay, the second accumulated delay is an accumulated delay from the transmitter to the first network device, the second network device is the next-hop device of the first network device, and the first packet is used by the second network device to reserve a slot for the first service based on the maximum tolerable delay, the second accumulated delay, and a slot forwarding entry of the second network device.

20. The apparatus according to claim 19, wherein the first packet further comprises second expected slot information, the second expected slot information indicates a slot that the first network device expects the second network device to reserve for the first service, and the first packet is used by the second network device to reserve a slot for the first service based on the maximum tolerable delay, the second accumulated delay, the second expected slot information, and the slot forwarding entry of the second network device.

21. The apparatus according to any one of claims 15 to 20, wherein the obtaining module is configured to:
receive a second packet sent by the second network device, wherein the second packet indicates an available slot of the second network device, and the second network device is the next-hop device of the first network device; and
generate the slot forwarding entry of the first network device based on the second packet and the first slot.

22. The apparatus according to claim 21, wherein the second packet indicates that the available slot of the second network device comprises the second slot, the second packet comprises an end-to-end delay corresponding to the second slot, the end-to-end delay corresponding to the second slot is a delay from the second network device to the receiver of the first service, and the obtaining module is configured to:
determine, based on the end-to-end delay corresponding to the second slot, the end-to-end delay corresponding to the first slot; and
generate the slot forwarding entry of the first network device based on the end-to-end delay corresponding to the first slot.

23. The apparatus according to claim 22, wherein the apparatus further comprises: a determining module, configured to determine the next-hop slot information based on the second slot, wherein the next-hop slot information indicates the second slot; and
the obtaining module is configured to generate the slot forwarding entry of the first network device based on the end-to-end delay corresponding to the first slot and the next-hop slot information.

24. The apparatus according to any one of claims 21 to 23, wherein the second packet comprises a slot bitmap, the slot bitmap comprises a plurality of bits in one-to-one correspondence with a plurality of slots in a gate control list that is of the second network device and that is used to forward the first service, each bit indicates a state of a corresponding slot, and the state comprises an available state or an unavailable state.

25. An apparatus for obtaining a slot forwarding entry, used in a first network device, wherein the apparatus comprises:
a receiving module, configured to receive a packet sent by a second network device, wherein the packet indicates an available slot of the second network device; and
a processing module, configured to generate a slot forwarding entry based on the packet and an available slot of the first network device.

26. The apparatus according to claim 25, wherein the available slot of the first network device comprises a first slot, the packet indicates that the available slot of the second network device comprises a second slot, the packet comprises an end-to-end delay corresponding to the second slot, and the end-to-end delay corresponding to the second slot is a delay from the second network device to a receiver; and the processing module is configured to:
determine, based on the end-to-end delay corresponding to the second slot, an end-to-end delay corresponding to the first slot, wherein the end-to-end delay corresponding to the first slot is a delay from the first network device to the receiver; and
generate the slot forwarding entry based on the end-to-end delay corresponding to the first slot.

27. The apparatus according to claim 26, wherein the processing module is configured to:
determine next-hop slot information based on the second slot, wherein the next-hop slot information indicates the second slot; and
generate the slot forwarding entry based on the end-to-end delay corresponding to the first slot and the next-hop slot information.

28. The apparatus according to any one of claims 25 to 27, wherein the packet comprises a slot bitmap, the slot bitmap comprises a plurality of bits in one-to-one correspondence with a plurality of slots in a gate control list of the second network device, each bit indicates a state of a corresponding slot, and the state comprises an available state or an unavailable state.

29. A resource reservation apparatus, comprising a memory and a processor, wherein
the memory is configured to store a computer program; and
the processor is configured to execute the computer program stored in the memory, to cause the resource reservation apparatus to perform the method according to any one of claims 1 to 10.

30. An apparatus for obtaining a slot forwarding entry, comprising a memory and a processor, wherein
the memory is configured to store a computer program; and
the processor is configured to execute the computer program stored in the memory, to cause the apparatus for obtaining a slot forwarding entry to perform the method according to any one of claims 11 to 14.

31. A resource reservation system, comprising a first network device and a second network device, wherein the second network device is a next-hop device of the first network device, and the first network device comprises the resource reservation apparatus according to any one of claims 15 to 24 and 29.

32. A system for obtaining a slot forwarding entry, comprising a first network device and a second network device, wherein the first network device comprises the apparatus for obtaining a slot forwarding entry according to any one of claims 25 to 28 and 30.

33. A computer-readable storage medium, wherein the computer-readable storage medium stores a computer program; and when the computer program is executed, the method according to any one of claims 1 to 14 is implemented.

34. A computer program product, wherein the computer program product comprises a program or code; and when the program or the code is executed, the method according to any one of claims 1 to 14 is implemented.
